# EUROPÄISCHE PATENTANMELDUNG

(11) **EP 4 202 889 A1**
(43) Veröffentlichungstag der Anmeldung: **28.06.2023**
(21) Anmeldenummer: 22210263.4
(22) Anmeldetag: 29.11.2022
(51) Int. Cl.: G09F 3/03, G09F 3/00

(54) **VERSIEGELUNGSETIKETT, VERFAHREN ZUR HERSTELLUNG EINES VERSIEGELUNGSETIKETTS SOWIE VERWENDUNG**

(30) Priorität: 23.12.2021 DE 102021134470; 23.12.2021 DE 202021107042 U
(71) Anmelder: SCRIBOS GmbH, 69126 Heidelberg (DE)
(72) Erfinder: KRESSE, Tobias, 76135 Karlsruhe (DE); MASKOW, Patrick, 68535 Edingen-Neckarhausen (DE); TERHALLE, Bernd, 68309 Mannheim (DE); ZIEGLER, Eduard, 68199 Mannheim (DE)
(74) Vertreter: Zinsinger, Norbert

(57) **Zusammenfassung**

Die Erfindung betrifft ein Versiegelungsetikett (1) mit einer Trägerlage (2), einer Kleberschicht (4), und einer zwischen der Trägerlage (2) und der Kleberschicht (4) angeordneten Zwischenlage (3) mit Sollbruchstellen (30) zur inneren Trennung der Zwischenlage (3), wobei die Trägerlage (2) zumindest eine Papierschicht (21) aufweist. Die Erfindung betrifft ferner die Verwendung des Versiegelungsetiketts (1), dessen Herstellungsverfahren und eine Verwendung einer Trägerlage (2) umfassend oder bestehend aus einer Papierschicht (21) zur Herstellung des Versiegelungsetiketts (1).

## Beschreibung

Die Erfindung betrifft ein Versiegelungsetikett, dessen Verwendung sowie Verfahren zur Herstellung eines Versiegelungsetiketts.

Es ist bekannt, Gegenstände, wie Verpackungen, Behälter, Kuverts und Gehäuseteile, in einem geschlossenen Zustand zum Nachweis einer Öffnung mit einem Siegel zu versehen. Hierzu werden zum Beispiel Versiegelungsetiketten mittels einer Kleberschicht auf dem zu versiegelnden Gegenstand befestigt, so dass zum Öffnen des Gegenstands ein Ablösen oder Auftrennen des Versiegelungsetiketts notwendig ist. Gegen ein zerstörungsfreies Ablösen und Wiederaufbringen des Versiegelungsetiketts können im Inneren instabile Schichten vorgesehen werden. Für solche Versiegelungsetiketten werden die Trägerfolien aus selbsttragenden Kunststoff-Folien, wie gereckten thermoplastischen Folien, gebildet. Diese Trägerfolien lassen sich einfach transparent ausgestalten, so dass bei einem Wiederaufkleben bzw. Wiederzusammenfügen des Etiketts die mit der Ablösung einhergegangene innere Zerstörung sichtbar ist. Die beim Ablösen des Etiketts vom versiegelten Gegenstand ausgeübte Kraft wird dabei über die Trägerfolie in das Etikett eingeleitet. Durch ihre hohe Stabilität, gleichmäßige innere Struktur sowie geringe Fertigungstoleranzen gewährleisten die Kunststoff-Folien, dass beim Ablösen des Versiegelungsetiketts eine zuverlässige und gezielte Kraftübertragung über die Kunststoff-Folie auf die innenliegenden Schichten stattfindet und die Zerstörung des Etiketts bei der Ablösung in Gang gesetzt wird.

Durch die geringe Oberflächenenergie der Kunststoff-Folien und die damit verbundene schlechte Benetzbarkeit werden die Kunststoff-Folien der Etiketten, um eine ausreichende Oberflächenspannung zu erzielen und somit eine Bedruckung mit ausreichender Farbhaftung zu ermöglichen, Druckvorbehandlungen unterzogen sowie spezielle Druckprimer zur Erhöhung der Benetzbarkeit aufgetragen. Da die Wirkung von Druckvorbehandlungen, wie Corona- oder Plasma-Behandlungen, zeitlich begrenzt und der Einsatz von Druckprimern auf einen speziellen Anwendungsbereich eingeschränkt ist, gestaltet sich eine nachträgliche Bedruckung dieser vorgefertigter Etiketten durch den Anwender, also beispielsweise im Verpackungsprozess, einerseits schwierig und andererseits wird ein hohes Ausmaß an Ressourcen benötigt, wie insbesondere fossile Rohstoffe für die Kunststoff-Folien sowie die für die Oberflächenbehandlungen notwendige Energie.

Es ist somit eine Aufgabe der vorliegenden Erfindung ein verbessertes Versiegelungsetikett sowie verbesserte Verfahren zur Herstellung eines Versiegelungsetiketts und eine verbesserte Verwendung eines Versiegelungsetiketts anzugeben.

Die Aufgabe wird insbesondere gelöst mittels eines Versiegelungsetiketts nach Anspruch 1 sowie mittels eines Verfahrens nach Anspruch 40, einer Verwendung nach Anspruch 47 sowie einer Verwendung nach Anspruch 49.

Die Aufgabe wird gelöst durch ein Versiegelungsetikett, das eine Trägerlage, eine Kleberschicht und eine zwischen der Trägerlage und der Kleberschicht angeordnete Zwischenlage aufweist. Die Zwischenlage weist Sollbruchstellen zur inneren Trennung der Zwischenlage auf, wobei die Trägerlage zumindest eine Papierschicht aufweist.

Die Aufgabe wird weiter gelöst durch ein Verfahren zur Herstellung eines Versiegelungsetiketts. Das erfindungsgemäße Versiegelungsetikett ist oder wird insbesondere durch das erfindungsgemäße Verfahren hergestellt. Das Verfahren umfasst folgende Schritte, insbesondere in der angegebenen Reihenfolge:
a) Bereitstellen einer Trägerlage, wobei die Trägerlage zumindest eine Papierschicht aufweist,
b) Aufbringen einer Zwischenlage auf die Trägerlage, wobei die Zwischenlage Sollbruchstellen zur inneren Trennung der Zwischenlage aufweist oder die Sollbruchstellen in der Zwischenlage erzeugt werden,
c) Aufbringen einer Kleberschicht auf die Zwischenlage.

Die Aufgabe wird auch dadurch gelöst, das Versiegelungsetikett insbesondere zum Versiegeln eines Produkts zu verwenden. Zudem wird die Aufgabe insbesondere dadurch gelöst, zur Herstellung des Versiegelungsetiketts eine Trägerlage umfassend eine Papierschicht oder bestehend aus einer Papierschicht zu verwenden.

Überraschenderweise hat sich gezeigt, dass es möglich ist, eine Trennung der Zwischenlage in sich über eine von der Trägerlage mit der Papierschicht eingeleitete Kraft zuverlässig zu erreichen, obwohl die innere Trennung, insbesondere entlang einer Richtung zwischen der Trägerlage und der Kleberschicht, eine hohe Scherkraft in der Trägerlage bewirken kann und Papier aufgrund seiner Inhomogenität und relativ geringen Stabilität dazu neigt, sich in sich selbst aufzutrennen, so dass eine gezielte Kraftübertragung zur Aktivierung innenliegender Sollbruchstellen erschwert erscheint. Somit ist es beispielsweise möglich, eindrucksvolle und auffällige Nachweise einer Erstöffnung durch feine Strukturen der Zwischenlage in Form von Motiven oder Schriftzügen, die mit der Trägerlage abgelöst werden, bereitzustellen. Gleichzeitig wird eine verbesserte nachträgliche Dekorationsfähigkeit erreicht, indem die Saugfähigkeit der Oberfläche des Versiegelungsetiketts aufgrund der Papierschicht der Trägerlage gegenüber herkömmlichen Versiegelungsetiketten mit Kunststoff-Folien, wie thermoplastischen Folien, stark erhöht werden kann. Die Papieroberfläche kann zum Beispiel ohne spezielle Vorbehandlung von einer sehr großen Bandbreite an verschiedensten Druckfarben bedruckt werden. Somit kann eine Dekoration, insbesondere Bedruckung, in einem sehr späten Fertigungsstadium durchgeführt werden, da hierzu eine einfach zu dekorierende Außenfläche bereitsteht. Es wird also insbesondere eine verbesserte nachträgliche Bedruckbarkeit, beispielsweise mit chargenspezifischen oder stückindividuellen Informationen, wie Logistikinformationen, Verfallsdaten, Weblinks in Form von OR-Codes etc., erreicht, was zum Beispiel in der Verpackungsindustrie zunehmend an Bedeutung gewinnt. Überraschenderweise hat sich darüber hinaus gezeigt, dass es möglich ist, die Zwischenlage derart auszugestalten, dass eine samt Teilen der Zwischenlage abgelöste Trägerlage einem Altpapier-Prozess zugeführt werden kann, beispielsweise auch für den Fall, dass das gesamte Versiegelungsetikett nicht für den Altpapier-Prozess geeignet wäre. Damit wird eine erhöhte Recycelfähigkeit erreicht. Somit werden durch die vorliegende Erfindung insbesondere die Gestaltungsmöglichkeiten des Versiegelungsetiketts bei gleichzeitig gesteigerter Kosten- und Ressourceneffizienz verbessert.

Unter einem Etikett ist insbesondere ein selbstklebender Mehrschichtkörper zu verstehen. Unter Versiegeln ist insbesondere das Versehen mit einem Erstöffnungsnachweis zu verstehen. Das Versiegelungsetikett ist insbesondere ein selbstklebender Mehrschichtkörper zur Bereitstellung eines Erstöffnungsnachweises auf einem zu versiegelnden Produkt.

Unter einer Lage oder einer Schicht wird bevorzugt ein im Wesentlichen flächiges Gebilde verstanden. Eine Lage oder Schicht kann insbesondere selbst einschichtig oder mehrschichtig sein.

Eine Papierschicht ist insbesondere eine Schicht, die Papier umfasst oder daraus besteht. Unter Papier wird vorzugsweise ein flächiges Material mit einer flächenbezogenen Masse von 7 g/m² bis 225 g/m² verstanden, welches aus Faserstoffen hergestellt und insbesondere durch das Entwässern einer Fasersuspension gewonnen wird oder ist. Insbesondere weist Papier Bestandteile auf, einzeln oder in Kombination ausgewählt aus: Pflanzenfasern, Kunststofffasern, Baumwolle, Wolle, Seide, Zellulose, Zellstoff, Holzstoff, Altpapierstoff.

Unter Sollbruchstellen sind insbesondere ein oder mehrere Bereiche zu verstehen, an welchen bei Überschreitung eines vorbestimmten Werts einer mechanischen Belastung eine Trennung stattfindet. Durch die Sollbruchstellen wird vorzugsweise ein Erstöffnungsnachweis mittels einer insbesondere nachweislichen Trennung der Zwischenlage in sich bereitgestellt. Vorzugsweise handelt es sich dabei um Sollbruchstellen zur inneren Trennung der Zwischenlage durch eine über die Trägerlage in das Versiegelungsetikett geleitete Kraft. Diese Kraft ist bevorzugt die beim Ablösen der Trägerlage des auf ein zu versiegelndes Produkt aufgeklebten Versiegelungsetiketts ausgeübte Kraft.

Insbesondere stellen die Sollbruchstellen in der Zwischenlage ein Öffnungsmerkmal bereit, das durch die innere Trennung der Zwischenlage bevorzugt mit einer Kontur entlang der Sollbruchstellen sichtbar werden kann. Die Kontur ist, vorzugsweise bei Betrachtung senkrecht auf eine von dem Versiegelungsetikett aufgespannte Ebene, sichtbar und bevorzugt motivförmig. Beispielsweise umfasst das Öffnungsmerkmal wenigstens ein maschinenlesbares Merkmal, insbesondere einen Data Matrix Code oder QR-Code.

Insbesondere sind die Sollbruchstellen in einem Öffnungsbereich des Versiegelungsetiketts angeordnet, der vorzugsweise bei Betrachtung senkrecht auf eine von dem Versiegelungsetikett aufgespannte Ebene das Öffnungsmerkmal enthält. Dabei ist es auch möglich, dass das Versiegelungsetikett sich über den Öffnungsbereich hinaus erstreckt.

Die Sollbruchstellen verlaufen bevorzugt zumindest entlang einer Richtung zwischen der Trägerlage und der Kleberschicht. Unter einer Richtung zwischen der Trägerlage und der Kleberschicht kann insbesondere eine von der Kleberschicht auf die Trägerlage zeigende Richtung, insbesondere parallel zur Flächennormalen einer von dem Versiegelungsetikett, vorzugsweise der Trägerlage und/oder der Kleberschicht, aufgespannten Ebene, verstanden werden sowie auch eine von der Trägerlage auf die Kleberschicht zeigende Richtung. Insbesondere die Sollbruchstellen entlang einer Richtung zwischen der Trägerlage und der Kleberschicht bewirken eine vergleichsweise hohe Scherung in der Trägerlage. Es ist ferner möglich, dass die Zwischenlage Sollbruchstellen zur inneren Trennung senkrecht oder quer zu einer Richtung zwischen der Trägerlage und der Kleberschicht aufweist, insbesondere senkrecht zur Flächennormalen einer von dem Versiegelungsetikett, vorzugsweise der Trägerlage und/oder der Kleberschicht, aufgespannten Ebene.

Eine von dem Versiegelungsetikett, von einer Lage oder Schicht des Versiegelungsetiketts aufgespannte Ebene wird vorzugsweise durch zwei Richtungen aufgespannt, in welche das Versiegelungsetikett oder die entsprechende Lage oder Schicht die wesentlich größeren Maße aufweist, beispielsweise in einem kartesischen Koordinatensystem durch die x- und y-Richtung, wenn die z-Richtung insbesondere in Richtung der Dicke des Versiegelungsetiketts oder der entsprechenden Lage oder Schicht und damit insbesondere parallel zur Flächennormalen einer von dem Versiegelungsetikett, der entsprechenden Lage oder Schicht aufgespannten Ebene, zeigt. Eine Betrachtung senkrecht auf eine von dem Versiegelungsetikett oder einer Lage oder Schicht davon aufgespannte Ebene kann somit insbesondere auch als eine Betrachtung in Richtung der Ausbreitung der Dicke, als Draufsicht, Ansicht von unten und/oder Ansicht in Richtung der Flächennormalen verstanden werden.

Vorteilhafte Ausgestaltungen der Erfindung sind in den Unteransprüchen bezeichnet.

Es ist möglich, dass die Papierschicht direkt an der Zwischenlage angeordnet ist.

Es ist auch möglich, dass die Trägerlage eine Lackschicht aufweist, die vorzugsweise auf der der Zwischenlage zugewandten Seite der Papierschicht angeordnet ist. Die Lackschicht ist vorzugsweise eine Ausgleichsschicht, welche beispielsweise die Saugfähigkeit und/oder Unebenheit und/oder Rauigkeit der Papierschicht vorzugsweise einseitig herabsetzt und/oder insbesondere in Betrachtung senkrecht auf eine von dem Versiegelungsetikett aufgespannte Ebene auf einen flächenmäßig im Wesentlichen konstanten Wert setzt. Die Lackschicht ist vorteilhafterweise auch eine Stabilisierungsschicht, welche beispielsweise die Reißfestigkeit der Trägerlage erhöht. Zweckmäßigerweise wird zwischen Schritt a) und Schritt b) folgender Schritt durchgeführt:
a1) Aufbringen einer Lackschicht auf die Papierschicht.

Es ist auch denkbar, dass der Schritt a1) vor dem Schritt a) durchgeführt wird und in Schritt a) die Trägerlage samt Papierschicht und Lackschicht bereitgestellt wird. In Schritt b) wird die Zwischenlage bevorzugt auf die Lackschicht aufgebracht. Bevorzugt besteht die Trägerlage ausschließlich aus der Lackschicht und der Papierschicht. Insbesondere wird oder ist die Lackschicht mittels Flexodruck aufgebracht.

Ein Vorteil der Lackschicht ist, dass die optischen Eigenschaften der Trägerlage gezielt beeinflusst werden können und so beispielsweise eine verbesserte Sichtbarkeit einer Erstöffnung erreicht werden kann. Es ist zum Beispiel möglich, die Bildschärfe und Trübung, insbesondere den Haze-Wert, einer Trägerlage mit Papierschicht und Lackschicht gegenüber einer Trägerlage bestehend aus Papier, insbesondere also ohne die Lackschicht, je nach Anforderungen anzupassen. Bevorzugt erhöht die Lackschicht die Bildschärfe der Trägerlage und reduziert die Trübung der Trägerlage. Zudem kann ein weiterer Vorteil erreicht werden, dass sich durch die Lackschicht ein konstantes Trennverhalten, insbesondere der Zwischenlage, beispielsweise auch über verschiedene Papierchargen hinweg, erreichen lässt. Insbesondere ermöglicht die Lackschicht also eine verbesserte Krafteinleitung über die Papierschicht zu den Sollbruchstellen. Die Lackschicht kann beispielsweise eine über die Fläche der Papierschicht ungleichmäßig verteilte Saugfähigkeit sowie Unebenheiten ausgleichen und aufgrund der hohen Saugfähigkeit der Papierschicht kann die Lackschicht besonders gut mit der Papierschicht verankert werden. Indem die Lackschicht vorzugsweise eine gleichmäßigere Oberfläche und somit gleichmäßigere Haftungseigenschaften der Trägerlage bereitstellt, kann zur Erzeugung der Sollbruchstellen eine besonders zuverlässige und einfache Abstimmung der Lackschicht und der Zwischenlage aufeinander erreicht werden.

Zweckmäßigerweise ist die Lackschicht, insbesondere in Betrachtung senkrecht auf eine von dem Versiegelungsetikett aufgespannte Ebene, vorzugsweise in z-Richtung, zumindest einseitig oder beidseitig einer in der Zwischenlage angeordneten, in einer Richtung zwischen Kleberschicht und Trägerlage, insbesondere in z-Richtung, verlaufenden Sollbruchstelle angeordnet. Die Lackschicht ist oder wird bevorzugt vollflächig auf die Papierschicht aufgebracht. Es ist auch möglich, dass, insbesondere bei Betrachtung senkrecht auf eine von dem Versiegelungsetikett aufgespannte Ebene, die Zwischenlage von der Lackschicht vollständig überlappt ist. Weiter ist es möglich, dass die Lackschicht sich über die Zwischenlage und/oder über den Öffnungsbereich hinaus erstreckt oder lediglich im Öffnungsbereich vorgesehen ist.

Die Schichtdicke der Lackschicht liegt bevorzugt in einem Bereich von 1 µm bis 10 µm, besonders bevorzugt in einem Bereich von 1 µm bis 5 µm.

Zur Messung der Dicke einer Schicht oder Lage wird vorzugsweise nur die entsprechende Schicht oder Lage, insbesondere die Lackschicht, als solche herangezogen, bevorzugt gemessen auf einem nicht saugenden Untergrund. Die Messung wird insbesondere am Querschnitt durchgeführt. Es ist auch denkbar, dass eine entsprechende Lage oder Schicht mit einer entsprechenden Schichtdicke im Versiegelungsetikett aufgetragen ist oder wird.

Die Lackschicht ist oder wird zweckmäßigerweise mit einem Auftragsgewicht in einem Bereich von 2 g/m² bis 20 g/m², insbesondere von 2 g/m² bis 10 g/m², auf die Papierschicht aufgebracht. Durch einen Mindestwert von 1 µm kann vorteilhafterweise erreicht werden, dass auch bei lokal unterschiedlicher Saugfähigkeit der Papierschicht konstante Haftbedingungen für die Zwischenlage bereitgestellt sind oder werden. Durch den Maximalwert der Schichtdicke kann vorteilhafterweise erreicht werden, dass die abgelöste Trägerlage wiederverwertbar ist und beispielsweise einem Altpapier-Prozess zugeführt werden kann, indem vorzugsweise ein Großteil des mit der Trägerlage abgelösten Teils des Versiegelungsetiketts aus der Papierschicht besteht. Vorteilhafterweise weist die Lackschicht eine Schichtdicke in einem Bereich von 3 µm bis 7 µm auf. Hierdurch können vorteilhafterweise besonders konstante Haftbedingungen eines Transparentpapiers, besonders bevorzugt eines Papiers mit einer Masse von ca. 50 g/m², gewährleistet werden.

Insbesondere ist die Lackschicht semitransparent oder transparent, bevorzugt für Wellenlängen in einem Bereich von 380 nm bis 780 nm, vorzugsweise für Wellenlängen im für das menschliche Auge sichtbaren Wellenlängenbereich. Es ist auch möglich, dass die Lackschicht einen Transmissionsgrad von über 90 % aufweist, insbesondere Wellenlängen in einem Bereich von 380 nm bis 780 nm, vorzugsweise für Wellenlängen im für das menschliche Auge sichtbaren Wellenlängenbereich.

Weiter ist es möglich, dass die Lackschicht, bevorzugt zumindest im für das menschliche Auge sichtbaren Wellenlängenbereich und/oder für Wellenlängen in einem Bereich von 380 nm bis 780 nm, farblos ist. In anderen Worten weist die Lackschicht bevorzugt keine Farbmittel, insbesondere keine Farbstoffe und/oder keine Pigmente, auf.

Vorzugsweise ist die Lackschicht aus einem UV-härtenden Lack gebildet. Ein UV-härtender Lack wird oder ist vorzugsweise mittels UV-Bestrahlung ausgehärtet.

Der UV-härtende Lack umfasst dabei vorzugsweise die folgenden drei Gruppen von UV-reaktiven Materialien: Monomere oder Vernetzer, Bindemittel oder Oligomere, sowie Photoinitiatoren. Monomere oder Vernetzer sind oder werden insbesondere zum Lösen der Bindemittel, zur Einstellung der Viskosität und der Vernetzung des UV-Systems eingesetzt. Vorzugsweise sind Bindemittel oder Oligomere hauptsächlich für die Eigenschaften im ausgehärteten Zustand des UV-härtenden Lacks verantwortlich, wie beispielsweise Kratzfestigkeit, Flexibilität, Elastizität und Haftung auf Substraten. Photoinitiatoren zerfallen insbesondere photochemisch oder mittels Elektronenstahlung in Radikale und induzieren dadurch vorzugsweise Vernetzungsreaktionen im UV-härtenden Lack.

Der UV-härtende Lack umfasst bevorzugt Bindemittel, insbesondere auch als Harze oder Oligomere bezeichnet, die vernetzbare Gruppen umfassen ausgewählt aus: olefinische Gruppen, Vinylether- oder Epoxidgruppen. Acrylat-Oligomere und AcrylatMonomere, Methacrylate, acrylierten Polyestern, -ethern oder -urethanen.

Der UV-härtende Lack umfasst bevorzugt Monomere oder Vernetzer einzeln oder in Kombination ausgewählt aus: Butylacrylat, (2-Ethylhexyl)acrylat, sowie insbesondere mehrfunktionelle Acrylate, wie bevorzugt 1,4-Butandioldi(meth)acrylat, 1,6-Hexandioldi(meth)acrylat oder Trimethylolpropantri(meth)acrylat.

Der UV-härtende Lack umfasst bevorzugt Phototinitiatoren oder Photoinitiatorsysteme, insbesondere radikalische Photoinitatoren, und umfasst insbesondere folgende Stoffe einzeln oder in Kombination ausgewählt aus: Ketonderivate, Diisopropylxanthogendisulfidverbindungen, Acetophenonverbindungen, Benzophenone oder Benzoine.

Die Lackschicht, insbesondere die Lackschicht als UV-härtender Lack, ist oder wird vorzugsweise mit einem Auftragsgewicht in einem Bereich von 2 g/m² bis 20 g/m², insbesondere von 2 g/m² bis 10 g/m², auf die Papierschicht aufgebracht. Die Lackschicht, insbesondere der UV-Lack, ist oder wird vorzugsweise mit einer Viskosität in einem Bereich von 200 mPa*s bis 500 mPa*s aufgebracht. Hierdurch wird beispielsweise gewährleistet, dass die Lackschicht die Bedruckbarkeit der Papierschicht nicht beeinflusst und Unregelmäßigkeiten in der Papierschicht ausgleicht, indem sie einerseits nicht zu stark aufgesaugt wird und andererseits ausreichend verläuft, um eine ebene Oberfläche auszubilden.

Denkbar ist auch die Verwendung einer Trägerlage umfassend oder bestehend aus der Papierschicht mit der Lackschicht, zur Herstellung des Versiegelungsetiketts, wobei auf die Lackschicht eine Zwischenlage mit Sollbruchstellen zur inneren Trennung der Zwischenlage aufgebracht ist oder wird und optional auf die der Zwischenlage gegenüberliegende Seite der Papierschicht eine Dekorlage, insbesondere Druckschicht, aufgebracht wird.

Die Papierschicht weist insbesondere eine Schichtdicke in einem Bereich von 0,05 mm bis 0,1 mm auf. Bevorzugt ist die Papierschicht selbsttragend. Weiter ist es möglich, dass eine von dem Versiegelungsetikett aufgespannte Ebene, insbesondere in Draufsicht oder senkrecht auf die Ebene, vollständig von der Papierschicht gebildet wird. Es ist somit möglich, dass bereits durch die Papierschicht die tragende Funktion der Trägerlage gewährleistet ist. Weiter ist es möglich, dass die Papierschicht eine erste Außenfläche des Versiegelungsetiketts ausbildet, insbesondere wobei diese Außenfläche bedruckbar oder zumindest bereichsweise bedruckt ist. Damit wird insbesondere erreicht, dass eine umweltfreundliche Trägerlage mit einer gleichzeitig guten Bedruckbarkeit verwendet werden kann und Nachbehandlungen oder weitere Haftvermittler bzw. Primer eingespart werden können. Weiter ist es insbesondere möglich, bei dem Verfahren zur Herstellung eines Versiegelungsetiketts vorzugweise auf einer selbsttragenden Papierschicht, beispielsweise als vereinzelte Bögen oder als zusammenhängende Bahn, mehrere Versieglungsetiketten vorzubereiten, die dann bevorzugt durch mechanisches Trennen, beispielsweise Stanzen, Schneiden oder mittels Lasern, vereinzelt werden können.

Die Papierschicht ist vorzugsweise semitransparent oder transparent, insbesondere für Wellenlängen in einem Bereich von 380nm bis 780 nm, bevorzugt für Wellenlängen im für das menschliche Auge sichtbaren Wellenlängenbereich. Vorteilhafterweise ist die Trägerlage aufweisend die Papierschicht und optional die Lackschicht zumindest semitransparent oder transparent, insbesondere für Wellenlängen in einem Bereich von 380 nm bis 780 nm, bevorzugt für Wellenlängen im für das menschliche Auge sichtbaren Wellenlängenbereich.

Eine Transparenz der Papierschicht und der Trägerlage ist dabei von Vorteil, um einen eindeutigen Erstöffnungsnachweis auch bei Wiederverschluss des Versiegelungsetiketts zu gewährleisten.

Zweckmäßigerweise weist die Papierschicht ein Transparentpapier auf oder besteht daraus. Unter Transparentpapier ist vorzugsweise Papier zu verstehen, welches durch einen hohen Transmissionsgrad, vorzugsweise durch einen Transmissionsgrad von über 50 %, weiter bevorzugt von über 70 %, insbesondere im Wellenlängenbereich zwischen 380 nm bis 780 nm, transparent erscheint. Transparentpapiere umfassen beispielsweise Seidenpapiere, imprägnierte Papiere, vegetabile Papiere und/oder Pergamin.

Beispielsweise weist ein Transparentpapier, insbesondere vom Hersteller Canson (Annonay Cedex, Frankreich), mit einer flächenbezogenen Masse im Bereich von 40 g/m² bis 45 g/m² einen Transmissionsgrad zwischen 83 % bis 85 %, einen Haze-Wert von 100 % und einen Bildschärfe-Wert von 1,70 % bis 1,85 % auf. Ein Transparentpapier, insbesondere vom Hersteller Canson, weist wiederum beispielsweise mit einer flächenbezogenen Masse von 70 g/m² einen Transmissionsgrad von 80 % bis 82 %, einen Haze-Wert von 100 % und einen Bildschärfe-Wert von 1,45 % bis 1,5 % auf. Ein zum Vergleich herangezogenes Druckerpapier, insbesondere des Herstellers Steinbeis, mit einem Weißgrad von 90 nach ISO 11475:2017 ("Paper and board - determination of CIE whiteness D65/10 degrees (outdoor daylight)", Ausgabedatum: 2017-05) und einer flächenbezogenen Masse von 70 g/m² weist beispielsweise einen Transmissionsgrad von 15,5 %, einen Haze-Wert von 103 % und einen Bildschärfe-Wert von 0,67 % auf.

Unter Transmissionsgrad wird vorzugsweise das Verhältnis der Menge eines auf ein Medium einstrahlendes und/oder einfallendes Licht zu der Menge Licht, welche auf der gegenüberliegenden Seite des Mediums austritt, verstanden, wobei insbesondere keine Änderung in der Frequenz oder der Wellenlänge des Lichts stattgefunden hat. Das nicht transmittierte Licht wird vom Medium vorzugsweise reflektiert, gestreut und/oder absorbiert. So ist beispielsweise bei einem Transmissionsgrad eines Mediums von 0,9 bzw. von 90 % von dem einstrahlenden Licht auf der gegenüberliegenden Seite des Mediums 90 % wahrnehmbar. Unter semitransparent ist insbesondere ein Transmissionsgrad in einem Bereich von 30% bis 90% zu verstehen. Unter transparent ist insbesondere ein Transmissionsgrad in einem Bereich von 90% bis 100% zu verstehen.

Unter Haze bzw. Trübung wird hierbei bevorzugt eine diffuse Streuung, insbesondere Großwinkelstreuung, verstanden, welche insbesondere zu einer Abnahme der Abbildungsqualität führt. Als Streuzentren wirken dabei bevorzugt Teilchen oder Inhomogenitäten im Material, an welchen insbesondere das Licht in alle Raumrichtungen gestreut wird, wobei vorteilhafterweise auf jeden Raumwinkel nur eine geringe Streuintensität entfällt. Hierdurch wird insbesondere eine Verminderung des Kontrasts und/oder ein milchig-trübes Erscheinungsbild bewirkt, wobei dieser Effekt vorzugsweise als Haze oder Trübung bezeichnet wird. So stellt der Haze-Wert bevorzugt ein Maß für die Trübung von transparenten Proben, beispielsweise von Schichten, Lagen und/oder Folien, dar.

Unter Clarity bzw. Bildschärfe wird hierbei bevorzugt eine diffuse Streuung, insbesondere Kleinwinkelstreuung, verstanden, welche insbesondere zu einer Abnahme der Abbildungsqualität führt. Hierbei wird das Licht innerhalb eines kleinen Raumwinkels, vorzugweise weniger als 2,5°, derart abgelenkt, so dass die Streulichtmenge in einer engen Keule konzentriert ist. Hierdurch werden insbesondere Konturen verzerrt und/oder erscheinen weniger scharf, wobei dieser Effekt vorzugsweise als Clarity oder Bildschärfe bezeichnet wird. So stellt der Clarity-Wert bevorzugt ein Maß für die Bildschärfe von transparenten Proben, beispielsweise von Schichten, Lagen und/oder Folien, dar.

Beispielsweise werden der Haze-Wert und der Bildschärfe-Wert bzw. Clarity-Wert mit dem Messgerät "BYK haze-gard i" der Firma Byk-Gardener GmbH, Geretsried, Deutschland, gemessen. Hierbei wird vorzugsweise die zu vermessende Schicht, Lage oder Folie in den offenen Probenraum des Messgerätes gehalten, und insbesondere für den Haze-Wert an den sogenannten "haze-port" des Gerätes angelegt, wobei die Messung vorteilhafterweise mittels Lichtart D65, vorzugsweise mit Kompensation, durchgeführt wird. Anschließend wird bevorzugt das Ergebnis der Messung am Bildschirm des Messgerätes angezeigt. Da der Haze-Wert und der Clarity-Wert vorteilhafterweise in Prozent (%) angegeben werden, betragen die Wertebereiche des Haze-Wertes und des Clarity-Wertes daher bevorzugt 0 % bis 100 %. Bevorzugt beträgt der Maximalwert 100 %. Gegebenenfalls auftretende höhere Werte als 100 % können beispielsweise, insbesondere in Abhängigkeit des verwendeten Messprinzips, durch zusätzliche Streulichteffekte und/oder Reflexionseffekte während der Messung verursacht werden.

Es ist auch möglich, dass die Papierschicht eine Dekorlage, welche insbesondere eine zweite Außenfläche des Versiegelungsetiketts bildet, aufweist oder die Dekorlage auf die Papierschicht aufgebracht wird. Die Dekorlage kann vorteilhafterweise direkt auf die Papierschicht aufgebracht sein oder werden.

Die Dekorlage wird oder ist insbesondere partiell, vorzugsweise also nicht vollflächig, auf die Papierschicht aufgetragen. Somit ist es möglich, dass, vorzugsweise bei einer Betrachtung senkrecht auf eine von dem Versiegelungsetikett aufgespannte Ebene, bevorzugt in Draufsicht, die Papierschicht eine erste Außenfläche des Versiegelungsetiketts und die Dekorlage eine zweite Außenfläche des Versiegelungsetiketts bildet. Die Dekorlage ist oder wird insbesondere motivförmig aufgebracht. Unter motivförmig sind beispielsweise ein oder mehrere Formen aus geometrischer Form, Guilloche, Endlosmuster, Bild, Symbol, Logo, Wappen, Portrait, alphanumerische Zeichen, QR-Code, Barcode zu verstehen. Hiermit können beispielsweise auch Logistikinformationen, Verfallsdaten oder Weblinks in Form von QR-Codes aufgebracht sein oder werden.

Es ist möglich, dass die Dekorlage eine Druckschicht umfasst oder daraus besteht. Die Dekorlage wird vorzugsweise mittels eines Verfahrens einzeln oder in Kombination ausgewählt aus Flexodruck, Offsetdruck, Tiefdruck, Tampondruck, Inkjet-Druck, Xerografie, Kaltprägen, Heißprägen, Thermotransfer aufgebracht.

Insbesondere ist es möglich, dass vor und/oder nach einem Aufbringen des Versiegelungsetiketts auf das zu versiegelnde Produkt folgender Schritt durchgeführt wird:
Aufbringen, insbesondere Aufdrucken, einer Dekorlage auf die Papierschicht, welche insbesondere eine zweite Außenfläche des Versiegelungsetiketts bildet. Wie insbesondere oben bereits beschrieben, wird das Aufbringen bevorzugt partiell, vorzugsweise motivförmig, durchgeführt.

Vorteilhafterweise kann die Dekorlage in einem sehr späten Fertigungsstadium aufgebracht werden, so dass eine verbesserte Individualisierbarkeit der Versiegelungsetiketten erreicht wird. Zudem kann die Dekorlage aufgrund der Saugfähigkeit der Papierschicht einen sehr starken Verbund mit der Papierschicht eingehen, so dass durch die Dekorlage gleichzeitig die Stabilität verbessert werden kann und beispielsweise eine große Bandbreite an Druckfarben und Druckverfahren eingesetzt werden kann. Insbesondere Flexodruckfarben haften üblicherweise auf Papier besser als auf Kunststoff, insbesondere auf Folie. Beispielhaft für Flexodruckfarben können hier die Gemini^{™} Serie (UV-Flexodruckfarbe) der Firma Flint Group, Luxemburg, genannt werden.

Es ist auch denkbar, dass die Dekorlage eine Metallschicht umfasst oder daraus besteht. Zudem ist es möglich, dass die Dekorlage ein optisch variables Element umfasst oder daraus besteht. Es ist beispielsweise möglich, dass die Dekorlage hierzu eine Replizierschicht mit einem refraktiven und/oder diffraktiven Oberflächenrelief aufweist. Die Replizierschicht kann aus einem thermoplastischen, d.h. thermisch härtbaren oder trockenbaren Replizierlack oder einem UV-härtbaren Replizierlack oder einer Mischung aus solchen Lacken bestehen. Es ist dabei vorteilhaft, wenn das in die Replizierschicht eingebrachte Oberflächenrelief ein optisch variables Element, insbesondere ein Hologramm, Kinegram^{®} oder Trustseal^{®}, ein vorzugsweise sinusförmiges Beugungsgitter, eine asymmetrische Reliefstruktur, ein Blaze-Gitter, eine vorzugsweise isotrope oder anisotrope Mattstruktur, oder eine lichtbeugende und/oder lichtbrechende und/oder lichtfokussierende Mikro- oder Nanostruktur, eine binäre oder kontinuierliche Fresnellinse, eine Mikroprismenstruktur, eine Mikrolinsenstruktur oder eine Kombinationsstruktur daraus ausbildet.

Durch solche Strukturen oder Kombinationen daraus lassen sich vorteilhafterweise vielfältige optische Effekte erzielen, die zudem schwer nachzuahmen und mit üblichen optischen Kopiermethoden nicht oder nur schwer kopierbar sind, so dass ein besonders fälschungssicheres Versiegelungsetikett bereitgestellt werden kann.

Die Replizierschicht kann auch als äußerste Schicht der Dekorlage vorgesehen sein oder werden und dabei insbesondere ein Oberflächenrelief aufweisen, welches alternativ oder zusätzlich zu den optischen Eigenschaften vorzugsweise auch noch andere funktionale Eigenschaften aufweist, beispielsweise einzeln oder in Kombination ausgewählt aus: taktile Funktion, schmutzabweisende Funktion, feuchtigkeitsabweisende Funktion, antimikrobielle Funktion.

Vorzugsweise ist oder wird die Dekorlage im Register aufgebracht, insbesondere im Register zur Zwischenlage, bevorzugt zur ersten Funktionsschicht und/oder zur zweiten Funktionsschicht.

Bei einer bevorzugten Ausführungsform des Versiegelungsetiketts sowie des Verfahrens zur Herstellung eines Versiegelungsetiketts weist die Zwischenlage eine oder mehrere der folgenden Schichten auf oder wird aus einer oder mehreren der folgenden Schichten ausgebildet:
- eine erste Funktionsschicht zur Einstellung einer Haftkraft in der Zwischenlage, wobei die erste Funktionsschicht vorzugsweise nicht vollflächig auf die Trägerlage aufgebracht ist oder wird;
- eine erste Farbschicht, die vorzugsweise auf die Trägerlage und die erste Funktionsschicht aufgebracht ist oder wird,
- eine zweite Funktionsschicht zur Einstellung einer Haftkraft in der Zwischenlage, wobei die zweite Funktionsschicht bevorzugt nicht vollflächig auf die erste Farbschicht aufgebracht ist oder wird,
- eine zweite Farbschicht, welche vorzugsweise vollflächig auf die zweite Funktionsschicht und erste Farbschicht aufgebracht ist oder wird.

Zweckmäßigerweise umfasst Schritt b) ein oder mehrere der folgenden Schritte, insbesondere in der angegebenen Reihenfolge:
b1) bevorzugt nicht vollflächiges Aufbringen einer ersten Funktionsschicht zur Einstellung einer Haftkraft in der Zwischenlage auf die Trägerlage,
b2) Aufbringen einer ersten Farbschicht, insbesondere auf die Trägerlage und erste Funktionsschicht,
b3) bevorzugt nicht vollflächiges Aufbringen einer zweiten Funktionsschicht zur Einstellung einer Haftkraft in der Zwischenlage,
b4) bevorzugt vollflächiges Aufbringen einer zweiten Farbschicht, insbesondere auf die zweite Funktionsschicht und erste Farbschicht.

Insbesondere ist oder wird durch ein strukturiertes Auftragen der ersten und zweiten Funktionsschicht der Trenneffekt der Sollbruchstellen zur inneren Trennung der Zwischenlage bevorzugt unabhängig von der Adhäsion der ersten und zweiten Farbschichten zueinander ausgebildet, so dass vorteilhafterweise viele unterschiedliche Farben zum Einsatz kommen können. Die erste und zweite Farbschicht sind oder werden dabei vorzugsweise verschiedenfarbig ausgebildet und bevorzugt möglichst kontrastreich gewählt. Mit Farbe ist im vorliegenden Zusammenhang insbesondere das gesamte Farbspektrum der Pantone^{®} oder RAL^{®} Farben gemeint sowie Schwarz und Weiß.

Die erste Farbschicht ist oder wird vorzugsweise vollflächig auf die Trägerlage aufgebracht oder zumindest vollflächig in der Zwischenlage angeordnet, bevorzugt falls die Zwischenlage nicht vollflächig auf der Trägerlage aufgebracht ist oder wird.

Die erste Funktionsschicht ist oder wird insbesondere direkt auf die Lackschicht aufgebracht, d.h. vorzugsweise ohne weitere Schichten zwischen der ersten Funktionsschicht und der Lackschicht.

Vorzugsweise ist oder wird die Kleberschicht, insbesondere bei Betrachtung senkrecht auf eine von dem Versiegelungsetikett aufgespannte Ebene, vollflächig auf der Zwischenlage angeordnet. Bevorzugt ist oder wird die Kleberschicht vollflächig auf die zweite Farbschicht aufgebracht, insbesondere bei Betrachtung senkrecht auf eine von dem Versiegelungsetikett aufgespannte Ebene.

Mittels der durch die ersten und zweiten Funktionsschicht eingestellten Haftkräfte sind oder werden insbesondere die Sollbruchstellen in der Zwischenlage vorgegeben. Zumindest eine Schicht oder beide Schichten aus erster Funktionsschicht und zweiter Funktionsschicht sind bevorzugt als Trennlackschicht ausgebildet. Es ist auch denkbar, dass zumindest eine Schicht oder beide Schichten aus erster Funktionsschicht und zweiter Funktionsschicht als Primer ausgebildet sind. Ein Primer erhöht vorzugsweise die Haftung angrenzender oder über den Primer verbundener Schichten. Ein Trennlack verringert vorzugsweise die Haftung angrenzender oder über den Trennlack verbundener Schichten.

Bei einer bevorzugten Ausführungsform verringert die erste Funktionsschicht die Haftkraft zwischen der ersten Farbschicht und der Trägerlage, insbesondere im Vergleich zu umliegenden Bereichen in Betrachtung senkrecht auf eine von dem Versiegelungsetikett aufgespannte Ebene. Die zweite Funktionsschicht verringert bevorzugt die Haftkraft zwischen erster Farbschicht und der zweiten Farbschicht, insbesondere im Vergleich zu umliegenden Bereichen in Betrachtung senkrecht auf eine von dem Versiegelungsetikett aufgespannte Ebene.

Insbesondere ist oder wird die erste Funktionsschicht derart ausgestaltet, dass die Haftkraft zwischen erster Funktionsschicht und erster Farbschicht geringer ist als die Haftkraft zwischen erster Farbschicht und einer ihr direkt benachbarten Schicht, insbesondere der Trägerlage, bevorzugt der Papierschicht oder der Lackschicht. Es ist alternativ oder zusätzlich auch möglich, dass die zweite Funktionsschicht derart ausgestaltet ist, dass die Haftkraft zwischen zweiter Funktionsschicht und erster Farbschicht geringer ist als die Haftkraft zwischen zweiter Funktionsschicht und einer ihr direkt benachbarten Schicht, insbesondere der zweiten Farbschicht und/oder der Kleberschicht.

So ist es möglich, dass beim Ablösen der Trägerlage, insbesondere von einem mit dem Versiegelungsetikett versiegelten Produkt, die erste Farbschicht in einem von der ersten Funktionsschicht bestimmten Bereich von der Trägerlage abgelöst wird und auf der Kleberschicht verbleibt, insbesondere auf der zweiten Farbschicht verbleibt. Weiter ist es möglich, dass beim Ablösen der Trägerlage die erste Farbschicht von der Kleberschicht in einem von der zweiten Funktionsschicht bestimmten Bereich abgelöst wird und somit mit der Trägerlage abgelöst wird. Die erste Farbschicht trennt sich also in sich und wird außerhalb der durch die erste Funktionsschicht bestimmten Bereiche gemeinsam mit der Trägerlage abgelöst. Die Zwischenlage trennt sich bei dieser Ausführungsform also insbesondere entlang der Sollbruchstellen durch die Trennung der ersten Farbschicht in sich und die Trennung der ersten Farbschicht von der ersten Funktionsschicht sowie der zweiten Funktionsschicht.

Zweckmäßigerweise sind oder werden die erste und zweite Funktionsschicht zumindest bereichsweise nicht überlappend, insbesondere bei Betrachtung senkrecht auf eine von dem Versiegelungsetikett aufgespannte Ebene, angeordnet. Vorzugsweise sind oder werden die erste und zweite Funktionsschicht komplementär zueinander ausgebildet. Komplementär bedeutet, dass insbesondere bei einer Betrachtung senkrecht auf eine von dem Versiegelungsetikett aufgespannte Ebene, die beiden Funktionsschichten die gesamte Ebene im Öffnungsbereich des Versiegelungsetikettes abdecken und die Funktionsschichten sich insbesondere nicht überlappen. Vorzugsweise ist oder wird die zweite Funktionsschicht partiell als Negativ der ersten Funktionsschicht aufgebracht, bevorzugt auf die erste Farbschicht aufgebracht.

Die Zwischenlage weist vorzugsweise in sich eine Haftkraft auf, die geringer ist als die Haftkraft der Trägerlage in sich und der Kleberschicht in sich.

Das Verhältnis der Haftkraft der Trägerlage in sich zur Haftkraft der Zwischenlage in sich ist vorzugsweise größer 1, insbesondere größer 5, besonders bevorzugt größer 7. Somit wird insbesondere erreicht, dass sich das Papier nicht in sich selbst auftrennt, bevor die Trennung an den Sollbruchstellen stattfindet.

Die Haftkraft zwischen der ersten Farbschicht und der Lackschicht ist bevorzugt größer als die Haftkraft zwischen der ersten Farbschicht und der ersten Funktionsschicht. Die Haftkraft zwischen der zweiten Farbschicht und der Kleberschicht ist bevorzugt größer als die Haftkraft zwischen der ersten Farbschicht und der ersten Funktionsschicht. Die Haftkraft zwischen der ersten und zweiten Farbschicht ist vorzugsweise größer als die Haftkraft zwischen der ersten Farbschicht und der ersten Funktionsschicht.

Das Verhältnis der Haftkraft zwischen der zweiten Farbschicht und der Kleberschicht zur Haftkraft zwischen der ersten Farbschicht und der ersten Funktionsschicht ist vorzugsweise größer 1, und/oder liegt insbesondere in einem Bereich von 1 bis 2. Die Haftkraft zwischen der zweiten Farbschicht und der Kleberschicht ist zweckmäßigerweise größer, vorzugsweise deutlich größer, als die Haftkraft zwischen der ersten Farbschicht und der ersten Funktionsschicht, insbesondere so dass die Sollbruchstelle zwischen der ersten Farbschicht und der ersten Funktionsschicht verläuft.

Das Verhältnis der Haftkraft zwischen der ersten Farbschicht und der zweiten Farbschicht zur Haftkraft zwischen der ersten Farbschicht und der ersten Funktionsschicht ist vorzugsweise größer 1, und/oder liegt insbesondere in einem Bereich von 1 bis 2. Die Haftkraft zwischen der ersten Farbschicht und der zweiten Farbschicht ist zweckmäßigerweise größer, vorzugsweise deutlich größer, als die Haftkraft zwischen der ersten Farbschicht und der ersten Funktionsschicht, insbesondere so dass die Sollbruchstelle zwischen der ersten Farbschicht und der ersten Funktionsschicht verläuft.

Das Verhältnis der Haftkraft zwischen der Lackschicht und der ersten Funktionsschicht zur Haftkraft zwischen der ersten Funktionsschicht und der ersten Farbschicht ist bevorzugt größer 1, und/oder liegt insbesondere in einem Bereich von 1 bis 2.

Das Verhältnis der Haftkraft zwischen der ersten Farbschicht und der zweiten Farbschicht zur Haftkraft zwischen der ersten Farbschicht und der zweiten Funktionsschicht ist vorzugsweise größer 1, und/oder liegt insbesondere in einem Bereich von 1 bis 2.

Die Kleberschicht ist vorzugsweise derart ausgestaltet, dass eine höhere, insbesondere wesentlich höhere Haftkraft zwischen der Kleberschicht und einer Substratoberfläche erreicht wird als die Haftkraft zwischen oder innerhalb der Schichten der Trägerlage und der Zwischenlage. Die Kleberschicht ist insbesondere derart ausgestaltet, dass die Haftkraft zwischen der Kleberschicht und einer Substratoberfläche, auf welche die Kleberschicht bevorzugt aufzukleben ist, insbesondere aus Karton, Pappe, Stahl, Glas, PE oder PVC, höher ist als 5 N/cm, vorzugsweise in einem Bereich von 5 N/cm bis 20 N/cm liegt.

Die zu Anfang genannte Aufgabe kann insbesondere auch durch ein mit dem Versiegelungsetikett versiegeltes Produkt gelöst werden. Die obengenannten Haftkräfte und Verhältnisse von Haftkräften werden insbesondere von dem versiegelten Produkt aufgewiesen, welches das Versiegelungsetikett und eine Substratoberfläche des Produkts, insbesondere aus Karton, Pappe, Stahl, Glas, PE oder PVC, aufweist, auf die das Versiegelungsetikett mit der Kleberschicht aufgeklebt ist.

Unter Karton ist vorzugsweise Papier mit einer flächenbezogenen Masse von 150 g/m² bis 600 g/m² zu verstehen. Des Weiteren wird unter Pappe vorzugsweise Papier mit einer flächenbezogenen Masse ab 225 g/m² verstanden. Somit ist es möglich, dass ein Material, welches aufgrund seiner flächenbezogenen Masse in einem Überschneidungsbereich liegt mehreren Begriffen zugeordnet werden kann.

Unter Haftkraft ist hierbei insbesondere eine Trennkraft zu verstehen, d.h. vorzugsweise die benötigte Kraft zur Trennung der jeweiligen Lagen oder Schichten voneinander oder in sich. Die Bestimmung der Trennkraft wird vorzugsweise wie im Folgenden beschrieben ermittelt. Für die Bestimmung der Haftkraft innerhalb einer ersten Testschicht oder zwischen einer ersten und zweiten Testschicht, die insbesondere jeweils ausgewählt sind aus Trägerlage, insbesondere Papierschicht und/oder Lackschicht, Zwischenlage, insbesondere erste Funktionsschicht, zweite Funktionsschicht, erste Farbschicht und/oder zweite Farbschicht, und/oder Kleberschicht, wird beispielsweise zuerst eine Probe hergestellt. Diese Probe umfasst also zumindest die erste Testschicht und optional die zweite Testschicht. Falls notwendig, kann die Probe ferner mit Trägerlage und Kleberschicht versehen werden.

Die Probe wird so beispielsweise als Etikettenstreifen mit einer Breite von 10 mm bis 25 mm, vorzugsweise mit einer Breite von 25 mm, und einer Länge von mindestens 80 mm ausgebildet. Der Etikettenstreifen wird vorzugsweise mittels einer Andruckrolle mit einer Masse von 4 kg auf einen Untergrund festgeklebt, beispielsweise auf Karton, Pappe, Stahl, Glas, PE oder PVC, insbesondere so dass, sofern nicht die Haftkraft der Kleberschicht zu dem Untergrund ermittelt werden soll, die Haftkraft zum Untergrund die Haftkraft der Testschichten übersteigt. Anschließend wird eine Verklebungsdauer von mindestens 24 Stunden gewährleistet.

Mit einer geeigneten Materialprüfmaschine kann dann die Trennkraft ermittelt werden, beispielsweise mit einem Trennkraft-Abzugsprüfgerät, vorzugsweise vom Typ AR-2000 der Firma Rycobel (Deerlijk, Belgien), unter Verwendung eines Kraftaufnahmesensors, der entsprechend der zu erwartenden Trennkräfte ausgelegt ist, vorzugsweise zur Messung von Trennkräften im cN Bereich. Die Trägerlage wird zweckmäßigerweise mit dem Kraftaufnahmesensor und dem Trennkraft-Abzugsprüfgerät verbunden. Die Trägerlage des Etikettenstreifens wird dann mit einem Abzugswinkel von 180° bei einer Abzugsgeschwindigkeit von 300m/min abgezogen, so dass die erste Testschicht von der zweiten Testschicht abgelöst wird. Der Abzugswinkel ist der Winkel zwischen Abzugsrichtung und der Oberfläche des Etikettenstreifens auf der Unterlage. Insbesondere zeigt die Abzugsrichtung in Richtung der Länge des auf die Unterlage aufgeklebten Etikettenstreifens.

Hierbei wird die Trennkraft bevorzugt in cN/cm angegeben, also bevorzugt in Kraft pro Streifenbreite. Die Messung kann mit mehreren Proben durchgeführt und das arithmetische Mittel gebildet werden. Zweckmäßigerweise wird die Messung mit mindestens drei Proben durchgeführt. Über die erhaltenen Werte lassen sich beispielsweise die obengenannten Verhältnisse berechnen.

Soll die Haftkraft zwischen Lackschicht und erster Farbschicht ermittelt werden, ist zum Beispiel die erste Testschicht die Lackschicht der Trägerlage und die zweite Testschicht die erste Farbschicht. Soll die Haftkraft zwischen erster Farbschicht und erster Funktionsschicht ermittelt werden, ist zum Beispiel die erste Testschicht die erste Farbschicht und die zweite Testschicht die erste Funktionsschicht.

Ferner ist es möglich, dass die Zwischenlage derart ausgestaltet ist, dass zusätzlich eine Sollbruchstelle in der Trägerlage vorliegt.

Es ist auch möglich, dass der Öffnungsbereich nur einen Teilbereich des Versiegelungsetiketts darstellt und/oder der Öffnungsbereich durch die Sollbruchstelle in der Trägerlage begrenzt ist, vorzugsweise zumindest in Teilbereichen durch die Sollbruchstelle in der Trägerlage begrenzt ist.

Derartige Sollbruchstellen sind oder werden bevorzugt dadurch bereitgestellt, dass in einem Bereich, in welchem insbesondere keine Sollbruchstellen in der Zwischenlage vorgesehen sind, die Haftkräfte innerhalb und zwischen Trägerlage, Zwischenlage und Kleberschicht höher eingestellt werden, als in dem Öffnungsbereich mit den Sollbruchstellen in der Zwischenlage. Somit kann die Trägerlage samt den durch die innere Trennung der Zwischenlage abgelösten Teilen der Zwischenlage abgelöst werden und vorzugsweise an einem Übergangsbereich zu dem Bereich ohne Sollbruchstellen in der Zwischenlage aufgetrennt werden. Beispielsweise ist es möglich, zumindest die erste und zweite Funktionsschicht lediglich in dem Öffnungsbereich, also dem Bereich mit Sollbruchstellen in der Zwischenlage, vorzusehen, jedoch insbesondere in dem Bereich außerhalb des Öffnungsbereichs, zumindest die erste und zweite Funktionsschicht nicht vorzusehen. Es ist auch denkbar, in dem Bereich ohne Sollbruchstelle in der Zwischenlage, die Zwischenlage nicht vorzusehen oder insbesondere lediglich die Trägerlage und die Kleberschicht vorzusehen. Die Bereiche werden bevorzugt bei Betrachtung senkrecht auf eine von dem Versiegelungsetikett aufgespannte Ebene festgelegt.

Der Bereich ohne Sollbruchstellen in der Zwischenlage hat dabei vorzugsweise eine Breite von mindestens 0,5 mm, insbesondere in einem Bereich von 0,5 mm bis 50 mm.

Somit lässt sich vorteilhafterweise ein Papierabriss beim Ablösen der Trägerlage bzw. Öffnen des Etiketts induzieren und der Öffnungsnachweis verbessern. Die mit dem bereichsweisen Weglassen der Sollbruchstellen in der Trägerlage, insbesondere der Funktionsschichten, verbundene Zerstörung der Trägerlage bewirkt vorteilhafterweise in Kombination mit dem durch die Funktionsschichten erzeugten visuellen Effekt einen sehr starken Erstöffnungsnachweis. Darüber hinaus wird durch die üblicherweise unregelmäßigen Abrisskanten des Papiers das Wiederverschließen des Versiegelungsetiketts deutlich erschwert.

Die erste Funktionsschicht weist bevorzugt eine Schichtdicke in einem Bereich von 1 µm bis 5 µm auf. Insbesondere ist oder wird die erste Funktionsschicht aus einer wasserbasierten Dispersionsfarbe gebildet.

Die erste Farbschicht weist vorzugsweise eine Schichtdicke in einem Bereich von 1 µm bis 5 µm auf. Bevorzugt ist oder wird die erste Farbschicht aus einer UV-härtbaren Druckfarbe gebildet. Bevorzugt umfasst oder besteht die erste Farbschicht aus ein oder mehreren der folgenden Materialien: Farbmittel, Additive, Bindemittel, UV-Initiatoren.

Die zweite Funktionsschicht weist bevorzugt eine Schichtdicke in einem Bereich von 1 µm bis 5 µm auf. Vorzugsweise ist oder wird die zweite Funktionsschicht aus einer wasserbasierten Dispersionsfarbe gebildet.

Die zweite Farbschicht weist insbesondere eine Schichtdicke in einem Bereich von 1 µm bis 5 µm auf. Bevorzugt ist oder wird die zweite Farbschicht aus einer UV-härtbaren Druckfarbe gebildet. Bevorzugt umfasst oder besteht die zweite Farbschicht aus ein oder mehreren der folgenden Materialien: Farbmittel, Additive, Bindemittel, UV-Initiatoren.

Für die erste und zweite Funktionsschicht werden beispielsweise wasserbasierte Dispersionsfarben verwendet, während für die Lackschicht, die erste Farbschicht und die zweite Farbschicht bevorzugt UV-Druckfarben verwendet werden. Die UV-Druckfarben werden oder sind nach dem Aufbringen der jeweiligen Schicht mittels UV-Licht ausgehärtet.

Zum Aufbringen der ersten und/oder zweiten Funktionsschicht, der ersten und/oder zweiten Farbschicht und/oder der Lackschicht wird vorzugsweise Flexodruck verwendet. Zum Aufbringen der ersten und/oder zweiten Funktionsschicht, der ersten und/oder zweiten Farbschicht und/oder der Lackschicht können auch andere Druckverfahren, einzeln oder in Kombination ausgewählt aus Tiefdruck, Siebdruck, Offsetdruck, Tampondruck, Inkjet-Druck verwendet werden.

Die Schichtdicke der Kleberschicht liegt vorzugsweise in einem Bereich von 10 µm bis 50 µm. Insbesondere ist oder wird die Kleberschicht mit einem Auftragsgewicht in einem Bereich von 10g/m² bis 50 g/m² auf die Zwischenlage, insbesondere die zweite Farbschicht, aufgetragen. Insbesondere umfasst die Kleberschicht oder besteht die Kleberschicht aus Acrylat, Naturkautschuk, Synthesekautschuk oder Kombinationen daraus.

Zum Aufbringen der Kleberschicht wird oder ist die Kleberschicht beispielsweise in Form eines sogenannten Transferfix aufkaschiert. Ein Transferfix beschreibt insbesondere eine Klebmasse, die zwischen zwei transparenten Folien, vorzugsweise auch Liner genannt, eingelegt ist. Bevorzugt wird im Verfahren zur Herstellung des Versiegelungsetiketts eine der beiden transparenten Folien, insbesondere der beiden Linern, abgezogen und die Klebmasse mit der verbleibenden transparenten Folie, insbesondere dem verbleibenden Liner, auf die der Trägerlage abgewandte Seite der Zwischenlage aufkaschiert, insbesondere auf die zweite Farbschicht aufkaschiert.

Für die Kleberschicht werden bevorzugt Acrylat-Klebmassen verwendet. Diese weisen vorteilhafterweise eine sehr gute Beständigkeit gegen äußere Einflüsse, wie zum Beispiel UV-Einstrahlung, Feuchtigkeit oder Lösemitteln auf und die Klebeeigenschaften lassen sich im Polymerisationsprozess sehr gut einstellen und kontrollieren. Somit kann für unterschiedlichste Verpackungssubstrate wie Papier, Glas, Keramik, Kunststoff, Metall, etc. eine ausreichende Haftung erzielt werden. Die Kleberschicht wird vorzugsweise derart ausgestaltet, dass die Klebkraft der verwendeten Masse auf dem jeweiligen Produktsubstrat insbesondere größer als 5 N/cm ist und damit bevorzugt deutlich größer als die Trennkräfte der verwendeten Farb- und Funktionsschichten untereinander, welche bevorzugt im Bereich cN/cm liegen, ist.

Es hat sich zudem als vorteilhaft erwiesen, dass zumindest eine der ersten Funktionsschicht und zweiten Funktionsschicht UV-lumineszierend ist. Bei Bestrahlung mit UV-Licht sondert eine UV-lumineszierende Schicht vorzugsweise für das menschliche Auge sichtbares Licht ab, insbesondere in einem Wellenlängenbereich von 380 nm bis 430 nm.

Insbesondere ist oder wird mittels UV-lumineszierender Pigmente eine Registermarke erzeugt. Vorteilhafterweise kann die UV-Lumineszenz zum Detektieren der Position der Registermarke verwendet werden. Anschließend ist es möglich, in Relation zu dieser Registermarke ein registergenaues Aufbringen ein oder mehrerer Schichten des Versiegelungsetiketts durchzuführen, insbesondere zum Aufbringen zumindest zweier Schichten im Register zueinander ausgewählt aus Trägerlage, erste Funktionsschicht, zweite Funktionsschicht, erste Farbschicht, zweite Farbschicht, Lackschicht, Dekorlage und Kleberschicht.

Es hat sich insbesondere als vorteilhaft erwiesen, dass die erste Funktionsschicht vorzugsweise mit UV-lumineszierenden Pigmenten versehen ist oder wird. Insbesondere ist oder wird eine Registermarke vorzugsweise mittels der UV-lumineszierenden Pigmente erzeugt, die bevorzugt vor dem Aufbringen der zweiten Funktionsschicht in Schritt b3) mit UV-Licht bestrahlt wird und anhand des abgestrahlten Lichts die Position der Registermarke bestimmt wird und dann bevorzugt zur Ausrichtung einer weiteren Schicht, insbesondere der zweiten Funktionsschicht und/oder der Dekorlage, im Register zur ersten Farbschicht verwendet wird.

Es hat ist auch denkbar, dass die zweite Funktionsschicht vorzugsweise mit UV-lumineszierenden Pigmenten versehen ist oder wird.

Insbesondere ist oder wird eine Registermarke vorzugsweise mittels der UV-lumineszierenden Pigmente erzeugt, die mit UV-Licht bestrahlt wird und anhand des abgestrahlten Lichts die Position der Registermarke bestimmt wird und anschließend bevorzugt zur Ausrichtung der Dekorlage im Register verwendet wird.

Die erste und/oder zweite Funktionsschicht weist vorzugsweise einen Anteil UV-lumineszierender Pigmente in einem Bereich zwischen 0,5 bis 10 Masseprozent, bevorzugt zwischen 2,5 bis 5 Masseprozent, der Masse der jeweiligen Funktionsschicht auf.

Durch die UV-Lumineszenz kann so eine verbesserte Registergenauigkeit erreicht werden.

In einer bevorzugten Ausführungsform weist die Trägerlage, insbesondere die Papierschicht und vorzugsweise auch die optionale Lackschicht, keine UV-lumineszierende Bestandteile auf, insbesondere kein optischen, UV-lumineszierenden Aufheller. Vorzugsweise weist die Trägerlage, insbesondere vollflächig, einen Transmissionsgrad im Bereich von UV-Wellenlängen, insbesondere im Wellenlängenbereich von 280 nm bis 380 nm, von über 90 % auf. Somit wird insbesondere der registergenaue Druckprozess der Funktionsschichten verbessert, indem eine zusätzliche UV-Lumineszenz vermieden wird.

Unter registriert oder im Register bzw. passergenau bzw. registergenau oder Passergenauigkeit oder Registergenauigkeit ist eine Lagegenauigkeit zweier oder mehrerer Schichten relativ zueinander zu verstehen. Dabei soll sich die Registergenauigkeit vorzugsweise innerhalb einer vorgegebenen Toleranz, der Registertoleranz, bewegen und dabei möglichst gering sein. Gleichzeitig ist die Registergenauigkeit von mehreren Lagen und/oder Schichten zueinander ein wichtiges Merkmal, um die Prozesssicherheit zu erhöhen. Die lagegenaue Positionierung kann insbesondere mittels sensorisch, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein. Eine im Register aufgebrachte Lage oder Schicht weist also vorzugsweise zu zumindest einer anderen Lage oder Schicht eine definierte Lagebeziehung mit einer vorbestimmten maximalen Lagetoleranz auf, wozu im Herstellungsverfahren bevorzugt zumindest ein Sensor eine Registermarke dieser anderen Lage oder Schicht detektiert, die Position der anderen Schicht bestimmt wird und eine Ausrichtung der im Register aufzubringenden Lage oder Schicht in Abhängigkeit der Position der anderen Schicht durchgeführt wird.

Es ist auch denkbar, dass nur eine der beiden Funktionsschichten vorgesehen ist oder wird. Weiter ist es möglich, dass die Sollbruchstellen alternativ oder zusätzlich mit Leerstellen, vorzugsweise im jeweiligen Schicht-Material, beispielsweise mit Stanzungen und/oder mit Perforationen versehen oder unterstützt sind oder werden.

Das Versiegelungsetiketts wird insbesondere zum Versiegeln eines Produkts verwendet, wobei es vorzugsweise möglich ist, dass vor und/oder nach einem Aufbringen des Versiegelungsetiketts auf das zu versiegelnde Produkt folgender Schritt durchgeführt wird:
Aufbringen, insbesondere Aufdrucken, einer Dekorlage auf die Papierschicht, welche insbesondere eine zweite Außenfläche des Versiegelungsetiketts bildet.

Weiter ist es insbesondere möglich, bei dem Verfahren zur Herstellung des Versiegelungsetiketts vorzugweise auf einer Trägerlage, bevorzugt einer insbesondere selbsttragenden Papierschicht, die optional mit der Lackschicht versehen ist oder wird, mehrere Versieglungsetiketten vorzubereiten, bevorzugt gemäß dem beschriebenen Verfahren. Die mehreren Versiegelungsetiketten können dabei beispielsweise gleichzeitig mittels der oben genannten Schritte hergestellt werden und liegen auf derselben Trägerlage vor. Anschließend ist es möglich, durch mechanisches Trennen, beispielsweise Stanzen, Schneiden und/oder Lasern, ein Vereinzeln der Versiegelungsetiketten durchzuführen. Das Vereinzeln kann beispielsweise vor dem Aufbringen der Dekorlage stattfinden und das Aufbringen der Dekorlage dann erst nach einer Zwischenlagerung oder einem Transport, beispielsweise zu einem Verpackungsprozess und/oder einer Versiegelung, durchgeführt werden.

Im Folgenden wird die Erfindung anhand von mehreren Ausführungsbeispielen unter Zuhilfenahme der beiliegenden Zeichnungen beispielhaft erläutert. Dabei zeigen:
Fig. 1 ein Versiegelungsetikett im Querschnitt,
Fig. 2a ein Versiegelungsetikett im Querschnitt,
Fig. 2b ein geöffnetes Versiegelungsetikett im Querschnitt,
Fig. 3a ein Versiegelungsetikett im Querschnitt,
Fig. 3b ein geöffnetes Versiegelungsetikett im Querschnitt,
Fig. 4a ein Versiegelungsetikett im Querschnitt,
Fig. 4b ein geöffnetes Versiegelungsetikett im Querschnitt,
Fig. 5 ein Verfahren zur Herstellung eines Versiegelungsetiketts.

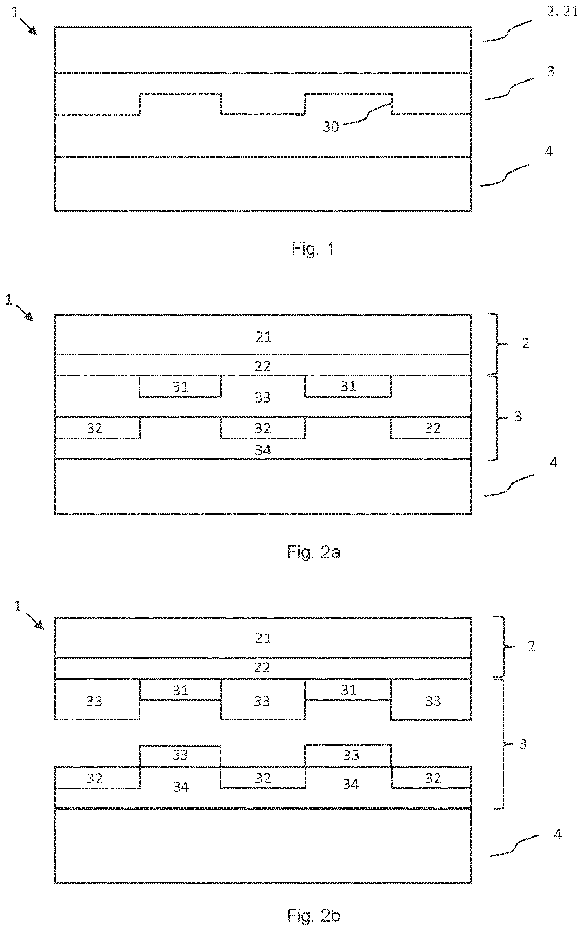

Fig. 1 zeigt schematisch einen Querschnitt eines Beispiels für ein Versiegelungsetikett 1. Unter einer Betrachtung senkrecht auf eine von dem Versiegelungsetikett 1 aufgespannte Ebene ist hierbei vorzugsweise eine Betrachtung in Draufsicht, also insbesondere in Fig. 1 senkrecht von oben nach unten, zu verstehen.

Das Versiegelungsetikett 1 weist eine Trägerlage 2, eine Kleberschicht 4 sowie eine Zwischenlage 3 auf. Die Zwischenlage 3 ist zwischen der Trägerlage 2 und der Kleberschicht 4 angeordnet. Die Zwischenlage 3 weist Sollbruchstellen 30 zur inneren Trennung der Zwischenlage 3 auf. Die Trägerlage 2 weist zumindest die Papierschicht 21 auf. Die Zwischenlage 3 ist insbesondere derart ausgestaltet, dass sie sich entlang der gestrichelten Trennlinie, welche die Sollbruchstellen 30 darstellt, auftrennbar ist oder auftrennt, vorzugsweise wenn das Versiegelungsetikett 1 auf ein versiegeltes Produkt aufgeklebt ist und über die Trägerlage 2 eine Kraft in das Versiegelungsetikett 1 eingeleitet wird. Wie in Fig. 1 beispielhaft gezeigt ist, können die Sollbruchstellen 30 entlang einer Richtung zwischen Trägerlage 2 und Kleberschicht 4 verlaufen sowie auch senkrecht zu dieser Richtung. Die z-Richtung wird hier also insbesondere von einer vertikalen Richtung gebildet.

Die Sollbruchstellen 30 können insbesondere mit einem zu den Fig. 2a, 2b, 3a, 3b, 4a und 4b beschriebenen Aufbau bereitgestellt werden. Alternativ oder zusätzlich ist es möglich, dass die Sollbruchstellen mittels Leerstellen im jeweiligen Schicht-Material, Stanzungen und/oder Perforationen versehen oder unterstützt sind oder werden.

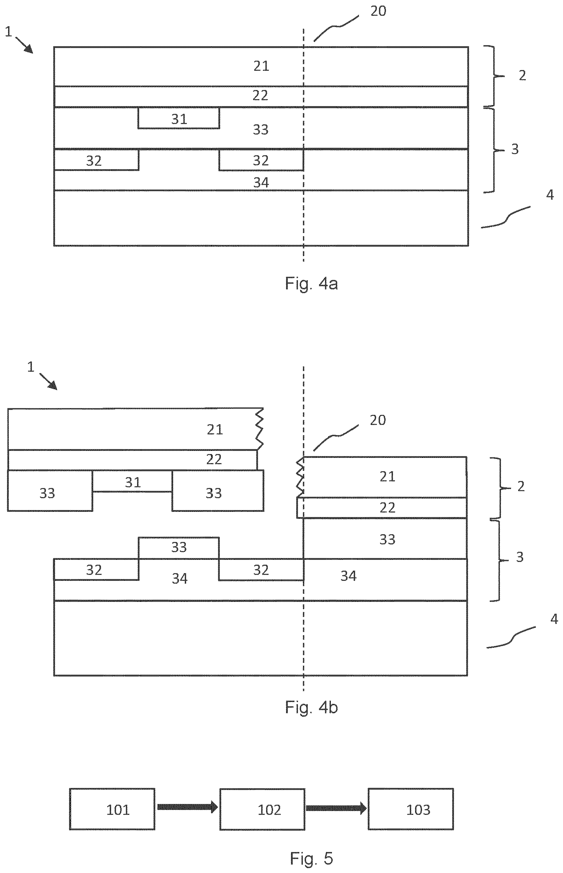

Es ist auch denkbar, dass das Versiegelungsetikett 1 einen Öffnungsbereich aufweist, der entsprechend dem durch Fig. 1 dargestellten Ausschnitt ausgebildet ist. Außerhalb des Ausschnitts kann das Versiegelungsetikett 1 beispielsweise auch ohne Zwischenlage oder zumindest ohne Funktionsschichten sein, wie beispielhaft in Fig. 4b zu sehen ist, oder auch ohne Farbschichten ausgebildet sein. Ferner ist es möglich, dass die Trägerlage 2 eine hier nicht dargestellte Lasche zum Ablösen des Versiegelungsetiketts 1 vom versiegelten Gegenstand aufweist.

Das Verfahren zur Herstellung des Versiegelungsetiketts 1 ist beispielhaft zu Fig. 5 beschrieben.

Bevorzugt ist die Papierschicht 21 selbsttragend. Weiter ist es möglich, dass eine von dem Versiegelungsetikett 1 aufgespannte Ebene, hier also insbesondere in Draufsicht auf das Versiegelungsetikett 1, die Papierschicht 21 vollständig von dem Versiegelungsetikett 1 umfasst ist und/oder das Versiegelungsetikett 1 vollflächig die Papierschicht 21 aufweist. Zweckmäßigerweise erfüllt die Papierschicht 21 die tragende Funktion der Trägerlage 2. Die Papierschicht 21 bildet vorteilhafterweise eine erste Außenfläche des Versiegelungsetiketts 1, die in Fig. 1 zum Beispiel durch die oberste Seite des Versiegelungsetiketts 1 dargestellt ist. Die erste Außenfläche ist vorteilhafterweise beschichtbar, insbesondere bedruckbar und/oder zumindest bereichsweise bedruckt. Die Papierschicht 21 weist insbesondere eine Schichtdicke in einem Bereich von 0,05 mm bis 0,1 mm auf. Die Papierschicht 21 ist beispielsweise direkt an der Zwischenlage 3 angeordnet. Es ist jedoch auch möglich, die der Zwischenlage 3 zugewandte Seite der Papierschicht 21 mit einer Beschichtung, insbesondere einer Lackschicht, zu versehen, wie dies beispielsweise zu den Fig. 2 bis 4 beschrieben ist. Vorteilhafterweise ist die Papierschicht 21 und die Trägerlage 2 semitransparent oder transparent, insbesondere für Wellenlängen in einem Bereich von 380 nm bis 780 nm, vorzugsweise für Wellenlängen im für das menschliche Auge sichtbaren Wellenlängenbereich. Zweckmäßigerweise wird als Papierschicht 21 ein Transparentpapier verwendet. Transparentpapiere umfassen beispielsweise Seidenpapiere, imprägnierte Papiere, vegetabile Papiere und/oder Pergamin. Zum Beispiel weist das Transparentpapier, insbesondere vom Hersteller Canson, eine flächenbezogene Masse im Bereich von 40 g/m² bis 45 g/m², vorzugsweise einen Transmissionsgrad zwischen 83 % bis 85 %, bevorzugt einen Haze-Wert von 100 % und insbesondere einen Bildschärfe-Wert von 1,70 % bis 1,85 % auf. Es ist beispielsweise auch ein Transparentpapier, insbesondere vom Hersteller Canson, möglich, das mit einer flächenbezogenen Masse von 70 g/m² einen Transmissionsgrad von 80 % bis 82 %, einen Haze-Wert von 100 % und einen Bildschärfe-Wert von 1,45 % bis 1,5 % aufweist.

Durch die Papierschicht 21 wird insbesondere erreicht, dass eine umweltfreundliche Trägerlage 2 mit einer gleichzeitig guten Bedruckbarkeit verwendet werden kann, wobei Nachbehandlungen oder weitere Haftvermittler eingespart werden können und eine Erstöffnung zuverlässig nachweisbar ist.

Fig. 2a zeigt schematisch ein Beispiel für ein Versiegelungsetikett 1 in einem geschlossenen Zustand, wobei es sich beispielsweise auch um einen auf das zu versiegelnde Produkt aufgeklebten Zustand handeln kann. Fig. 2b zeigt schematisch ein Beispiel eines Versiegelungsetiketts 1 insbesondere in einem geöffneten Zustand. Dabei ist der untere Teil mit der Kleberschicht 4 beispielsweise auf das zu versiegelnde Produkt oder eine Unterlage aufgeklebt. Im geöffneten Zustand ist das Öffnungsmerkmal vorzugsweise in Draufsicht sichtbar, durch welches insbesondere die Erstöffnung nachweisbar ist. In dem geöffneten Zustand ist das Versiegelungsetikett 1 also entsprechend der Sollbruchstellen 30, vorzugsweise im Öffnungsbereich, aufgetrennt. Das Versiegelungsetikett 1 der Fig. 2b wurde beispielsweise von einer Person an einer (nicht dargestellten) Lasche der Trägerschicht 2 angefasst und abgezogen. Dabei bricht das Versiegelungsetikett 1 entlang der Sollbruchlinie 30 gemäß Fig. 1 auf, es entsteht eine abgezogene Trägerlage 2, also der in Fig. 2b oben dargestellte Teil, und ein am versiegelten Produkt verbleibender Rückstand, also der in Fig. 2b unten dargestellte Teil.

Fig. 2a zeigt schematisch insbesondere das in Fig. 1 dargestellte Versiegelungsetikett 1, wobei die Trägerlage 2 zusätzlich die Lackschicht 22 aufweist und die Zwischenlage 3 die erste Funktionsschicht 31, die zweite Funktionsschicht 32, die erste Farbschicht 33 und die zweite Farbschicht 34 aufweist. Die in Fig. 2a gezeigte Zwischenlage 3 weist beispielsweise folgenden Schichtaufbau auf:
- die nicht vollflächig auf die Trägerlage 2, insbesondere auf die Lackschicht 22, aufgebrachte Funktionsschicht 31 zur Einstellung einer Haftkraft in der Zwischenlage 3;
- die auf die Trägerlage 2, insbesondere die Lackschicht 22, und die erste Funktionsschicht 31 aufgebrachte erste Farbschicht 33,
- die nicht vollflächig auf der der Trägerlage 2 abgewandten Seite der ersten Farbschicht 33 aufgebrachte zweite Funktionsschicht 32 zur Einstellung einer Haftkraft in der Zwischenlage 3,
- die vollflächig auf die zweite Funktionsschicht 32 und erste Farbschicht 33 aufgebrachte zweite Farbschicht 34, wobei die zweite Farbschicht 34 auf der der Kleberschicht 4 zugewandten Seite der Zwischenlage 3 angeordnet ist.

Zweckmäßigerweise umfasst Schritt b) des Herstellungsverfahrens folgende Schritte in der angegebenen Reihenfolge:
b1) nicht vollflächiges Aufbringen der ersten Funktionsschicht 31 zur Einstellung einer Haftkraft in der Zwischenlage 3 auf die Trägerlage 2,
b2) Aufbringen einer ersten Farbschicht 33, insbesondere auf die Trägerlage 2 und erste Funktionsschicht 31,
b3) bevorzugt nicht vollflächiges Aufbringen einer zweiten Funktionsschicht 32 zur Einstellung einer Haftkraft in der Zwischenlage 3 auf die erste Farbschicht 33,
b4) bevorzugt vollflächiges Aufbringen einer zweiten Farbschicht 34, insbesondere auf die zweite Funktionsschicht 31 und erste Farbschicht 33.

Die erste Farbschicht 33 ist oder wird vorzugsweise vollflächig auf die Trägerlage 2, insbesondere die Lackschicht 22, aufgebracht oder zumindest vollflächig in der Zwischenlage 3 oder im Öffnungsbereich angeordnet, falls die Zwischenlage 3 nicht vollflächig auf der Trägerlage 2 aufgebracht ist oder wird. Die erste Funktionsschicht 31 ist oder wird insbesondere direkt auf die Lackschicht 22 aufgebracht, d.h. vorzugsweise ohne weitere Schichten zwischen der ersten Funktionsschicht 21 und der Lackschicht 22. Die weiteren Schichten können ebenfalls direkt aufeinander aufgebracht sein, wie dies beispielhaft und schematisch durch Fig. 2a gezeigt ist.

Vorzugsweise sind oder werden die erste und zweite Funktionsschicht 31, 32 komplementär zueinander ausgebildet. Komplementär bedeutet, dass insbesondere bei einer Betrachtung senkrecht auf eine von dem Versiegelungsetikett 1 aufgespannte Ebene, hier beispielsweise in einer Draufsicht, die beiden Funktionsschichten 31, 32 die gesamte Ebene im Öffnungsbereich abdecken und die Funktionsschichten 31 und 32 sich nicht überlappen. Die zweite Funktionsschicht 32 ist hier entsprechend der ersten Funktionsschicht 31 ausgebildet und auch in gleicher Weise bedruckt. Insbesondere ist oder wird die zweite Funktionsschicht 32 partiell als Negativ der ersten Funktionsschicht 31 aufgebracht, bevorzugt auf die erste Farbschicht 33 aufgebracht.

Für die erste und zweite Funktionsschicht 31, 32 sind oder werden beispielsweise wasserbasierte Dispersionsfarben verwendet. Für die Lackschicht 22, die erste Farbschicht 33 und die zweite Farbschicht 33 sind oder werden dabei bevorzugt UV-härtende Lacke oder UV-härtende Druckfarben verwendet. Die UV-härtenden Lacke oder Druckfarben sind oder werden vorzugsweise nach dem Aufbringen der jeweiligen Schicht mittels UV-Licht ausgehärtet. Die zweite Farbschicht 34 kann eine identische oder andere Farbe als die erste Farbschicht 33 aufweisen. Die erste und zweite Farbschicht 33 und 34 sind oder werden vorzugsweise verschiedenfarbig ausgebildet und bevorzugt möglichst kontrastreich gewählt. Beispielsweise ist oder wird als erste Farbschicht 33 eine blaue Farbschicht und als zweite Farbschicht 34 eine weiße Farbschicht aufgetragen. Mit Farbe ist hier bevorzugt das gesamte Farbspektrum der Pantone^{®} oder RAL^{®} Farben gemeint sowie Schwarz und Weiß. Zum Aufbringen der ersten und zweiten Funktionsschicht 31, 32, der ersten und zweiten Farbschicht 33, 34 und der Lackschicht 22 wird hier beispielsweise Flexodruck verwendet.

Die erste Funktionsschicht 31 weist bevorzugt eine Schichtdicke in einem Bereich von 1 µm bis 5 µm auf. Die erste Farbschicht 33 weist vorzugsweise eine Schichtdicke in einem Bereich von 1 µm bis 5 µm auf. Die zweite Funktionsschicht 32 weist bevorzugt eine Schichtdicke in einem Bereich von 1 µm bis 5 µm auf. Die zweite Farbschicht 34 weist insbesondere eine Schichtdicke in einem Bereich von 1 µm bis 5 µm auf. Die Schichtdicke der Kleberschicht 4 liegt vorzugsweise in einem Bereich von 10 µm bis 50 µm. Insbesondere ist oder wird die Kleberschicht 4 mit einem Auftragsgewicht in einem Bereich von 10g/m² bis 50 g/m² auf die Zwischenlage 3, insbesondere die zweite Farbschicht 34, aufgetragen. Die Kleberschicht 4 des in Fig. 2a gezeigten Versiegelungsetiketts 1 weist vorzugsweise eine Kleberschicht mit einem Auftragsgewischt von 25 g/m² auf.

Insbesondere umfasst die Kleberschicht 4 oder besteht die Kleberschicht 4 aus Acrylat, Naturkautschuk, Synthesekautschuk oder Kombinationen daraus. Die Kleberschicht ist oder wird bevorzugt als eine PSA (pressure sensitive adhesive)-Schicht, welche vorzugsweise als Acrylat-Haftklebemasse ausgebildet ist, aufgebracht. Das Versiegelungsetikett 1 wird insbesondere mittels der Kleberschicht 4 auf das zu versiegelnde Produkt aufgeklebt oder ist auf dieses aufklebbar. Zum Aufbringen der Kleberschicht 4 wird die Kleberschicht 4 beispielsweise in Form eines sogenannten Transferfix aufkaschiert. Ein Transferfix beschreibt insbesondere eine Klebmasse, die zwischen zwei transparenten Folien, vorzugsweise auch Liner genannt, eingelegt ist. Bevorzugt wird im Verfahren zur Herstellung des Versiegelungsetiketts eine der beiden transparenten Folien, insbesondere der beiden Linern, abgezogen und die Klebmasse mit der verbleibenden transparenten Folie, insbesondere dem verbleibenden Liner, auf die der Trägerlage abgewandte Seite der Zwischenlage aufkaschiert, insbesondere auf die zweite Farbschicht aufkaschiert.

Für die Kleberschicht 4 werden bevorzugt Acrylat-Klebmassen verwendet. Diese weisen vorteilhafterweise eine sehr gute Beständigkeit gegen äußere Einflüsse, wie zum Beispiel UV-Einstrahlung, Feuchtigkeit oder Lösemitteln auf und die Klebeeigenschaften lassen sich im Polymerisationsprozess sehr gut einstellen und kontrollieren. Somit kann für unterschiedlichste Produktsubstrate, insbesondere Verpackungssubstrate, wie Papier, Karton, Pappe, Glas, Keramik, Kunststoff, Metall, etc. eine ausreichende Haftung erzielt werden. Die Kleberschicht wird vorzugsweise derart ausgestaltet, dass die Klebkraft der verwendeten Masse auf dem jeweiligen Produktsubstrat größer als 5 N/cm und damit bevorzugt deutlich größer als die Trennkräfte der verwendeten Farb- und Funktionsschichten untereinander, welche bevorzugt im Bereich cN/cm liegen, ist.

Vorzugsweise ist oder wird die Kleberschicht 4, insbesondere bei Betrachtung senkrecht auf eine von dem Versiegelungsetikett 1 aufgespannte Ebene, vollflächig auf der Zwischenlage 3 angeordnet. Bevorzugt ist oder wird die Kleberschicht 4 vollflächig auf die zweite Farbschicht 34 aufgebracht, insbesondere bei Betrachtung senkrecht auf eine von dem Versiegelungsetikett 1 aufgespannte Ebene.

Die in Fig. 2a dargestellten Funktionsschichten sind vorzugsweise als Trennlackschicht ausgebildet. Wie in Fig. 2b gezeigt ist, kann so insbesondere die erste Farbschicht 33 von den Funktionsschichten 31 und 32 abgelöst werden. Es ist auch denkbar, dass zumindest eine Schicht oder beide Schichten aus erster Funktionsschicht 31 und zweiter Funktionsschicht 32 als Primer ausgebildet ist, insbesondere um die Sollbruchstellen 30 auf einer Seite der ersten Farbschicht 31 auszubilden, die dem Primer abgewandt ist. So können die Funktionsschichten eingesetzt werden, um die Sollbruchstellen vorzugeben.

Insbesondere durch die weiter oben beschriebenen Haftkräfte der Schichten des Versiegelungsetiketts 1 und deren Verhältnisse zueinander ist es möglich, Sollbruchstellen 30 in der Zwischenlage 3 bereitzustellen, wie diese in Fig. 1 beispielhaft dargestellt sind. Vorzugsweise verringert die erste Funktionsschicht 31 hierzu die Haftkraft zwischen der ersten Farbschicht 33 und der Trägerlage 2, insbesondere im Vergleich zu umliegenden Bereichen in Betrachtung senkrecht auf eine von dem Versiegelungsetikett aufgespannte Ebene. Die zweite Funktionsschicht 32 verringert bevorzugt die Haftkraft zwischen erster Farbschicht 33 und Kleberschicht 4, beispielsweise über eine Verringerung der Haftkraft zwischen erster Farbschicht 33 und zweiter Farbschicht 44, insbesondere im Vergleich zu umliegenden Bereichen in Betrachtung senkrecht auf eine von dem Versiegelungsetikett aufgespannte Ebene.

So ist es möglich, dass beim Ablösen der Trägerlage die erste Farbschicht 21 in einem von der ersten Funktionsschicht 21 bestimmten Bereich von der Trägerlage 2 abgelöst wird und auf der Kleberschicht 4 verbleibt, insbesondere auf der zweiten Farbschicht 34 verbleibt. Weiter ist es möglich, dass beim Ablösen der Trägerlage 2 die erste Farbschicht 33 von der Kleberschicht 4 in einem von der zweiten Funktionsschicht 32 bestimmten Bereich abgelöst wird und somit mit der Trägerlage 2 abgelöst wird, sich also die erste Farbschicht 33 in sich trennt und außerhalb der durch die erste Funktionsschicht 31 bestimmten Bereiche gemeinsam mit der Trägerlage 2 abgelöst wird.

Zweckmäßigerweise sind oder werden die erste und zweite Funktionsschicht 31, 32 zumindest bereichsweise nicht überlappend, insbesondere bei Betrachtung senkrecht auf eine von dem Versiegelungsetikett 1 aufgespannte Ebene, hier also einer Draufsicht, angeordnet. Vorzugsweise sind oder werden die erste und zweite Funktionsschicht 31, 32 komplementär zueinander ausgebildet. Insbesondere bei einer Betrachtung senkrecht auf eine von dem Versiegelungsetikett aufgespannte Ebene, hier also einer Draufsicht, decken die beiden Funktionsschichten 31, 32 also die gesamte Fläche im Öffnungsbereich des Versiegelungsetikettes ab und überlappen sich nicht. Insbesondere ist oder wird die zweite Funktionsschicht 32 partiell als Negativ der ersten Funktionsschicht 31 aufgebracht, bevorzugt auf die erste Farbschicht 33 aufgebracht.

Zur Ermittlung der Haftkräfte mit der weiter oben beschriebenen Methode können beispielsweise jeweils ein oder mehrere Schichten des zu Fig. 2b beschriebenen Versiegelungsetiketts 1, an denen die Haftkraft der entsprechenden Probe nicht gemessen werden soll, weggelassen werden.

Es hat sich zudem als vorteilhaft erwiesen, dass zumindest eine der ersten Funktionsschicht 31 und zweiten Funktionsschicht 32 UV-lumineszierend ist. Insbesondere ist oder wird mittels UV-lumineszierender Pigmente eine Registermarke in der jeweiligen Schicht erzeugt. Vorteilhafterweise kann die UV-Lumineszenz zum Detektieren der Position der Registermarke verwendet werden. Es hat sich insbesondere als vorteilhaft erwiesen, dass die erste Funktionsschicht 31 vorzugsweise mit UV-lumineszierenden Pigmenten versehen ist oder wird. Insbesondere ist oder wird eine Registermarke vorzugsweise mittels UV-lumineszierender Pigmente in der ersten Funktionsschicht 31 erzeugt, die bevorzugt vor dem Aufbringen der zweiten Funktionsschicht 32 in Schritt b3) mit UV-Licht bestrahlt wird und anhand des abgestrahlten Lichts die Position der Registermarke bestimmt wird und dann bevorzugt zur Ausrichtung der zweiten Funktionsschicht 32 im Register zur ersten Farbschicht 31 verwendet wird.

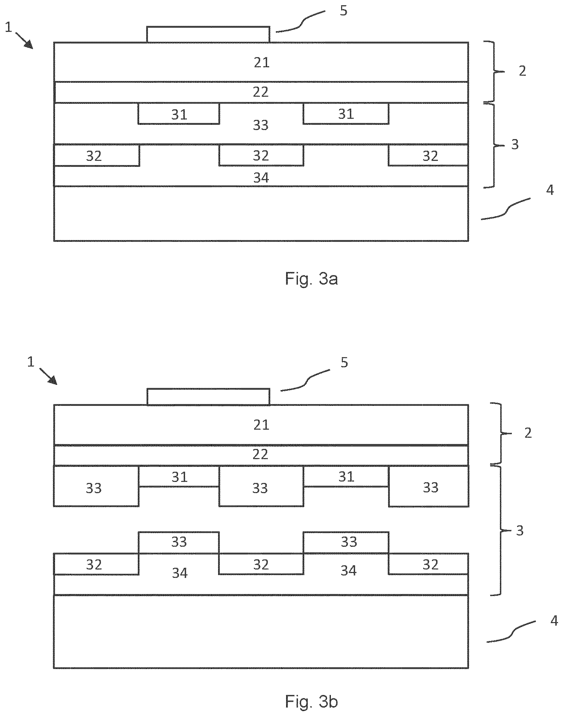

Es ist zudem denkbar, dass die zweite Funktionsschicht 32 mit UV-lumineszierenden Pigmenten versehen ist oder wird. Insbesondere ist oder wird eine Registermarke vorzugsweise mittels der UV-lumineszierenden Pigmente erzeugt, die mit UV-Licht bestrahlt wird und anhand des abgestrahlten Lichts die Position der Registermarke bestimmt wird und anschließend bevorzugt zur Ausrichtung der Dekorlage im Register verwendet wird, wie dies beispielsweise näher zu Fig. 3 beschrieben wird.

Die erste und/oder zweite Funktionsschicht 31, 32 weist vorzugsweise einen Anteil UV-lumineszierender Pigmente in einem Bereich zwischen 0,5 bis 10 Masseprozent, bevorzugt zwischen 2,5 bis 5 Masseprozent, der Masse der jeweiligen Funktionsschicht auf.

Durch die UV-Lumineszenz kann zum Beispiel eine verbesserte Registergenauigkeit erreicht werden.

In einer bevorzugten Ausführungsform weist die Trägerlage 2, insbesondere die Papierschicht 21 und vorzugsweise auch die optionale Lackschicht 22, keine UV-lumineszierende Bestandteile auf, insbesondere keine optischen, UV-lumineszierenden Aufheller. Vorzugsweise weist die Trägerlage 2, insbesondere vollflächig, einen Transmissionsgrad im Bereich von UV-Wellenlängen, insbesondere im Wellenlängenbereich von 280 nm bis 380 nm, von über 90 % auf. Somit wird insbesondere der registergenaue Druckprozess der Funktionsschichten 31, 32 oder der Dekorlage verbessert, indem eine zusätzliche UV-Lumineszenz vermieden wird.

Wie ferner insbesondere in Fig. 2a und Fig. 2b zu sehen ist, ist die Lackschicht 22, welche von der Trägerlage 2 aufgewiesen wird, auf der der Zwischenlage 3 zugewandten Seite der Papierschicht 21 angeordnet. Die Lackschicht 22 ist vorzugsweise eine Ausgleichsschicht, welche beispielsweise die Saugfähigkeit und/oder Unebenheit und/oder Rauigkeit der Papierschicht 21 vorzugsweise im Querschnitt einseitig, auf der Seite, worauf die Zwischenlage 3 aufgebracht ist oder wird, herabsetzt und/oder insbesondere in Betrachtung senkrecht auf eine von dem Versiegelungsetikett 1 aufgespannte Ebene auf einen flächenmäßig im Wesentlichen konstanten Wert setzt. Die Lackschicht 22 ist vorteilhafterweise auch eine Stabilisierungsschicht, welche beispielsweise die Reißfestigkeit der Trägerlage 2 erhöht. Zweckmäßigerweise wird zwischen Schritt a) und Schritt b) folgender Schritt durchgeführt:
a1) Aufbringen einer Lackschicht 22 auf die Papierschicht 21.

Es ist auch denkbar, dass der Schritt a1) vor dem Schritt a) durchgeführt wird und in Schritt a) die Trägerlage 2 samt Papierschicht 21 und Lackschicht 22 bereitgestellt wird. In Schritt b) wird die Zwischenlage 3 bevorzugt auf die Lackschicht 22 aufgebracht. Bevorzugt besteht die Trägerlage 2 ausschließlich aus der Lackschicht 22 und der Papierschicht 21.

Vorteilhafterweise können durch die Lackschicht 22 die optischen Eigenschaften der Trägerlage 2 gezielt beeinflusst werden und so beispielsweise eine verbesserte Sichtbarkeit einer Erstöffnung erreicht werden und es lässt sich durch die Lackschicht 22 insbesondere ein konstantes Trennverhalten, vorzugsweise der Zwischenlage 3, beispielsweise auch über verschiedene Papierchargen hinweg, erreichen. Ferner kann zur Bereitstellung der Sollbruchstellen eine besonders zuverlässige und einfache Abstimmung der Lackschicht 22 und der Zwischenlage 3 aufeinander erreicht werden.

Die Schichtdicke der Lackschicht 22 liegt bevorzugt in einem Bereich von 1 µm bis 10 µm, besonders bevorzugt von 1 µm bis 5 µm. Die Lackschicht 22 ist oder wird zweckmäßigerweise mit einem Auftragsgewicht in einem Bereich von 2 g/cm² bis 20 g/cm², insbesondere von 2 g/m² bis 10 g/m², auf die Papierschicht 21 aufgebracht. Ist oder wird als Papierschicht ein Transparentpapier und/oder eine Papierschicht mit einer Masse von beispielsweise 50 g/m² verwendet, so weist die Lackschicht 22 vorteilhafterweise eine Schichtdicke in einem Bereich von 3 µm bis 7 µm auf.

Die Messung der Schichtdicke wird bevorzugt an einem Querschnitt durchgeführt. Wird die Schichtdicke im Versiegelungsetikett durch einen saugenden Untergrund beeinflusst, wird insbesondere die Schichtdicke auf einem nicht saugenden Untergrund, wie beispielsweise oben beschrieben, und/oder beispielsweise unmittelbar beim Auftragen der entsprechenden Lage oder Schicht ermittelt.

Die Lackschicht 22 ist oder wird bevorzugt vollflächig auf die Papierschicht 21 aufgebracht. Es ist auch möglich, dass, insbesondere bei Betrachtung senkrecht auf eine von dem Versiegelungsetikett 1 aufgespannte Ebene, die Zwischenlage 3 von der Lackschicht 22 vollständig überlappt ist und/oder die Lackschicht 22 nur im Öffnungsbereich vorliegt. Weiter ist es möglich, dass die Lackschicht 22 sich über die Zwischenlage 3 hinaus erstreckt.

Die Lackschicht 22 ist insbesondere semitransparent oder transparent, insbesondere für Wellenlängen in einem Bereich von 380 nm bis 780 nm, vorzugsweise für Wellenlängen im für das menschliche Auge sichtbaren Wellenlängenbereich. Bei dem Beispiel der Fig. 2 weist die Lackschicht 22 vorzugsweise einen Transmissionsgrad von über 90 % auf, bevorzugt für Wellenlängen in einem Bereich von 380 nm bis 780 nm, insbesondere für Wellenlängen im für das menschliche Auge sichtbaren Wellenlängenbereich. Weiter ist es möglich, dass die Lackschicht 22, insbesondere für Wellenlängen in einem Bereich von 380 nm bis 780 nm, bevorzugt zumindest im für das menschliche Auge sichtbaren Wellenlängenbereich, farblos ist oder keine Farbmittel aufweist.

Vorzugsweise ist die Lackschicht 22 aus einem UV-härtenden Lack gebildet. Ein UV-härtender Lack wird oder ist vorzugsweise mittels UV-Bestrahlung ausgehärtet.

Der UV-härtende Lack umfasst dabei vorzugsweise die folgenden drei Gruppen von UV-reaktiven Materialien; Monomore oder Vernetzer, Bindemittel oder Oligomere, sowie Photoinitiatoren. Monomere oder Vernetzer werden insbesondere zum Lösen der Bindemittel, zur Einstellung der Viskosität und der Vernetzung des UV-Systems eingesetzt. Insbesondere Bindemittel oder Oligomere sind hauptsächlich für die Eigenschaften im ausgehärteten Zustand des UV-härtenden Lacks verantwortlich, wie beispielsweise Kratzfestigkeit, Flexibilität, Elastizität und Haftung auf Substraten. Photoinitiatoren zerfallen insbesondere photochemisch oder mittels Elektronenstrahlung in Radikale und induzieren dadurch Vernetzungsreaktionen im UV-Lack.

Der UV-Lack der Lackschicht 22 umfasst bevorzugt Bindemittel, auch als Harze oder Oligomere bezeichnet, die vernetzbare Gruppen umfassen ausgewählt aus: olefinische Gruppen, Vinylether- oder Epoxidgruppen, Acrylat-Oligomere und AcrylatMonomere, Methacrylate, acrylierten Polyestern, -ethern oder -urethanen.

Der UV-Lack umfasst bevorzugt Monomere oder Vernetzer einzeln oder in Kombination ausgewählt aus: Butylacrylat, (2-Ethylhexyl)acrylat, sowie insbesondere mehrfunktionelle Acrylate wie 1,4-Butandioldi(meth)acrylat, 1,6-Hexandioldi(meth)acrylat oder Trimethylolpropantri(meth)acrylat.

Der UV-Lack umfasst bevorzugt Phototinitiatoren oder Photoinitiatorsysteme, insbesondere radikalische Photoinitatoren, und umfasst insbesondere einzeln oder in Kombination ausgewählt aus: Ketonderivate, Diisopropylxanthogendisulfidverbindungen, Acetophenonverbindungen, Benzophenone oder Benzoine.

Die Lackschicht 22, insbesondere der UV-Lack, ist oder wird vorzugsweise mit einem Auftragsgewicht in einem Bereich von 2 g/m² bis 20 g/m², insbesondere von 2 g/cm² bis 10 g/m², auf die Papierschicht aufgebracht. Die Lackschicht 22, insbesondere der UV-Lack, ist oder wird vorzugsweise mit einer Viskosität in einem Bereich von 200 mPa*s bis 500 mPa*s aufgebracht. Hierdurch wird beispielsweise gewährleistet, dass die Lackschicht 22 Unregelmäßigkeiten in der Papierschicht 21 ausgleicht, indem sie einerseits nicht zu stark aufgesaugt wird und andererseits ausreichend verläuft, um eine ebene Oberfläche auszubilden.

Es ist auch denkbar, dass nur eine der beiden Funktionsschichten vorgesehen ist oder wird. Weiter ist es möglich, dass die Sollbruchstellen alternativ oder zusätzlich mit Leerstellen im jeweilige Schicht-Material, beispielsweise Stanzungen oder Perforationen versehen oder unterstützt sind oder werden.

Fig. 3a und Fig.3b zeigen schematisch einen Querschnitt eines Beispiels für ein Versiegelungsetikett 1, insbesondere das zu Fig. 2a und Fig. 2b beschriebene Versiegelungsetikett 1, wobei das Versiegelungsetikett 1 zusätzlich mit der Dekorlage 5 versehen ist. Die Dekorlage 5 kann vorteilhafterweise direkt auf die Papierschicht 21 aufgebracht sein oder werden. Insbesondere in Draufsicht bildet die Dekorlage 5 bevorzugt eine zweite Außenfläche des Versiegelungsetiketts.

Die Dekorlage 5 ist oder wird insbesondere partiell, bevorzugt motivförmig, aufgebracht. Unter motivförmig ist beispielsweise in ein oder mehreren Formen aus geometrischer Form, Guilloche, Endlosmuster, Bild, Symbol, Logo, Wappen, Portrait, alphanumerische Zeichen, QR-Code, Barcode zu verstehen. Hiermit können beispielsweise auch Logistikinformationen, Verfallsdaten oder Weblinks in Form von QR-Codes aufgebracht sein oder werden. Somit ist es möglich, dass, vorzugsweise bei einer Betrachtung in Draufsicht, die Papierschicht 21 eine erste Außenfläche des Versiegelungsetiketts 1 und die Dekorlage 5 eine zweite Außenfläche des Versiegelungsetiketts 1 bildet.

Es ist möglich, dass die Dekorlage 5 vorteilhafterweise eine Druckschicht umfasst oder daraus besteht. Die Dekorlage 5 wird vorzugsweise mittels eines Verfahrens einzeln oder in Kombination ausgewählt aus Flexodruck, Offsetdruck, Tiefdruck, Tampondruck, Inkjet-Druck, Xerografie, Kaltprägen, Heißprägen, Thermotransfer aufgebracht. Es ist auch denkbar, dass die Dekorlage 5 eine Metallschicht umfasst oder daraus besteht. Zudem ist es möglich, dass die Dekorlage 5 ein optisch variables Element umfasst oder daraus besteht.

Insbesondere kann dem Versiegelungsetikett 1 mit der Dekorlage 5 auch im geschlossenen Zustand ein optisch ansprechenderer Eindruck verliehen werden. Vorteilhafterweise kann die Dekorlage 5 zudem in einem sehr späten Fertigungsstadium und mit sehr individueller Formgebung aufgebracht werden, so dass eine verbesserte Individualisierbarkeit der Versiegelungsetiketten erreicht wird. Zudem kann die Dekorlage 5 aufgrund der Saugfähigkeit der Papierschicht 21 auf der ersten Außenfläche einen sehr starken Verbund mit der Papierschicht 21 eingehen, so dass durch die Dekorlage 5 gleichzeitig die Stabilität verbessert werden kann und beispielsweise eine große Bandbreite an Druckfarben und Druckverfahren eingesetzt werden kann.

Vorzugsweise ist oder wird die Dekorlage 5 im Register aufgebracht, insbesondere im Register zur Zwischenlage 3, bevorzugt zur ersten Funktionsschicht 31 und/oder zur zweiten Funktionsschicht 32. Weist die erste Funktionsschicht 31 und/oder die zweite Funktionsschicht 32 eine Registermarke auf, insbesondere eine mittels UV-lumineszierender Pigmente gebildete Registermarke, so wird diese bevorzugt detektiert und deren Position zum registergenauen Aufbringen der Dekorlage 5 verwendet.

Fig. 4a und Fig. 4b zeigen schematisch einen Querschnitt eines Versiegelungsetiketts 1, wie dieses beispielsweise zu Fig. 2a und Fig. 2b beschrieben ist, welches zusätzlich eine Sollbruchstelle 20 aufweist. Das Versiegelungsetikett 1 kann zudem die zu Fig. 3a und Fig. 3b beschriebene Dekorlage 5 aufweisen oder damit versehen werden.

Die Zwischenlage 3 ist insbesondere derart ausgestaltet, dass zusätzlich eine Sollbruchstelle 20 in der Trägerlage 2 vorliegt. Die Position der Sollbruchstelle 20 ist in Fig. 4a und Fig. 4b mit der gestrichelten Linie angedeutet, welche zur besseren Übersicht durchgezogen abgebildet ist, obwohl die Sollbruchstelle 20 vorzugsweise nicht in sämtlichen Schichten vorliegt, wie dies aus Fig. 4b ersichtlich ist. Wie insbesondere aus Fig. 4b weiter ersichtlich ist, ist es möglich, dass der Öffnungsbereich nur einen Teilbereich des Versiegelungsetiketts 1 darstellt und/oder der Öffnungsbereich durch die Sollbruchstelle 20 in der Trägerlage 2 begrenzt ist.

Derartige Sollbruchstellen 20 sind oder werden bevorzugt dadurch bereitgestellt, dass in einem Bereich, in welchem insbesondere keine Sollbruchstellen 30 in der Zwischenlage 3 vorgesehen sind, die Haftkräfte innerhalb und zwischen Trägerlage 2, Zwischenlage 3 und Kleberschicht 4 höher eingestellt werden, als in einem Bereich mit den Sollbruchstellen 30 in der Zwischenlage 3. Somit kann die Trägerlage 2 samt den durch die innere Trennung der Zwischenlage 3 abgelösten Teilen der Zwischenlage 3 abgelöst werden und vorzugsweise an einem Übergangsbereich zu dem Bereich ohne Sollbruchstellen 30 in der Zwischenlage 3 aufgetrennt werden, insbesondere an einer Außengrenze des Öffnungsbereichs. Beispielsweise ist es möglich, zumindest die erste und zweite Funktionsschicht 31 und 32 lediglich in dem Bereich mit Sollbruchstellen 30 in der Zwischenlage 3 vorzusehen, d.h. also insbesondere in dem Bereich ohne Sollbruchstellen 30 in der Zwischenlage 3 zumindest die erste und zweite Funktionsschicht 31 und 32 nicht vorzusehen. Es ist auch denkbar, in dem Bereich ohne Sollbruchstelle in der Zwischenlage 3, die Zwischenlage 3 nicht vorzusehen oder insbesondere lediglich die Trägerlage 2 und die Kleberschicht 4 vorzusehen. Die Bereiche werden bevorzugt bei Betrachtung senkrecht auf eine von dem Versiegelungsetikett 1 aufgespannte Ebene festgelegt, also in einer Draufsicht.

Der Bereich ohne Sollbruchstellen 30 in der Zwischenlage 3 hat dabei beispielsweise eine Breite von mindestens 0,5 mm, insbesondere in einem Bereich von 0,5 mm bis 50 mm.

Mittels der Sollbruchstelle 20 in der Trägerlage 2 lässt sich vorteilhafterweise ein Papierabriss beim Ablösen der Trägerlage 2 bzw. Öffnen des Etiketts induzieren und der Öffnungsnachweis, insbesondere gegenüber Etiketten mit thermoplastischen Folien als Träger, verbessern.

Wie in Fig. 4 weiter zu sehen ist, ist es möglich, dass die in der Trägerlage 2 vorliegenden Sollbruchstellen 20 sich zumindest teilweise in eine oder mehrere der folgenden Lagen und Schichten erstrecken: die Lackschicht 22, die Zwischenlage 3, die erste Farbschicht 33, die zweite Farbschicht 34.

Wie Fig. 4 verdeutlicht, ist es insbesondere auch möglich, dass der Öffnungsbereich nur einen Teilbereich des Versiegelungsetiketts 1 darstellt. In Fig. 4b ist der Öffnungsbereich beispielhaft links der gestrichelten Linie zu sehen. Der Öffnungsbereich kann also beispielsweise durch die Sollbruchstelle 20 in der Trägerlage begrenzt sein.

Fig. 5 zeigt ein Verfahren zur Herstellung eines Versiegelungsetiketts, wie dieses beispielsweise zu den Fig. 1 bis 4 beschrieben ist. Das Verfahren zur Herstellung umfasst die Schritte, insbesondere in der angegebenen Reihenfolge:
Schritt a): Bereitstellen 101 einer Trägerlage 2, wobei die Trägerlage 2 zumindest eine Papierschicht 21 aufweist,
Schritt b): Aufbringen 102 einer Zwischenlage 3 auf die Trägerlage 2, wobei die Zwischenlage 3 Sollbruchstellen 30 zur inneren Trennung der Zwischenlage 3 aufweist oder die Sollbruchstellen 30 in der Zwischenlage 3 erzeugt werden,
Schritt c): Aufbringen 103 einer Kleberschicht 4 auf die Zwischenlage 3.

Es ist beispielsweise auch möglich, die Papierschicht 21 als Trägerlage 2 zur Herstellung ein oder mehrerer Versiegelungsetiketten 1, wie diese zu den Figuren 1 bis 4 beschrieben sind, zu verwenden.

Es ist insbesondere möglich, bei dem Verfahren zur Herstellung des Versiegelungsetiketts 1 vorzugweise auf einer selbsttragenden Papierschicht 21, beispielsweise als vereinzelte Bögen oder als zusammenhängende Bahn mehrere Versieglungsetiketten 1 vorzubereiten, die dann bevorzugt durch mechanisches Trennen, beispielsweise Stanzen, Schneiden oder mittels Lasern, vereinzelt werden können. Das Vereinzeln kann beispielsweise vor dem Aufbringen der Dekorlage stattfinden und das Aufbringen der Dekorlage insbesondere nach einer Zwischenlagerung oder einem Transport, beispielsweise zu einem Verpackungsprozess, durchgeführt werden.

Das Versiegelungsetikett 1 wird insbesondere zum Versiegeln eines Produkts verwendet. Hierbei ist es möglich, dass vor und/oder nach einem Aufbringen des Versiegelungsetiketts 1 auf das zu versiegelnde Produkt folgender Schritt durchgeführt wird:
Aufbringen, insbesondere Aufdrucken, einer Dekorlage 5 auf die Papierschicht 21, welche insbesondere eine zweite Außenfläche des Versiegelungsetiketts 1 bildet. Ein derart hergestelltes Versiegelungsetikett 1 kann insbesondere, wie zu Fig. 3 beschrieben ist, ausgestaltet sein, wobei die Kleberschicht 4 mit dem zu versiegelnden Produkt verklebt ist.

Insbesondere ist eine Verwendung einer Trägerlage 2 umfassend oder bestehend aus einer Papierschicht 21 zur Herstellung eines wie in den Figuren 1 bis 4 gezeigten Versiegelungsetiketts 1 sowie zur Durchführung eines Verfahrens, wie zu Fig. 5 beschrieben, vorteilhaft.

### Bezugszeichenliste:

- 1: Versiegelungsetikett
- 2: Trägerlage
- 21: Papierschicht
- 22: Lackschicht
- 3: Zwischenlage
- 20, 30: Sollbruchstellen
- 31, 32: Funktionsschichten
- 33, 34: Farbschichten
- 4: Kleberschicht
- 5: Dekorlage

## Patentansprüche

1. Versiegelungsetikett (1) mit einer Trägerlage (2), einer Kleberschicht (4), und einer zwischen der Trägerlage (2) und der Kleberschicht (4) angeordneten Zwischenlage (3) mit Sollbruchstellen (30) zur inneren Trennung der Zwischenlage (3),
wobei die Trägerlage (2) zumindest eine Papierschicht (21) aufweist.

2. Versiegelungsetikett (1) nach Anspruch 1,
**dadurch gekennzeichnet,**
**dass** die Trägerlage (2) eine Lackschicht (22), insbesondere als Ausgleichsschicht und/oder als Stabilisierungsschicht, aufweist, die auf der der Zwischenlage (3) zugewandten Seite der Papierschicht (21) angeordnet ist, insbesondere wobei die Zwischenlage (3) von der Lackschicht (22) vollständig überlappt ist oder sich die Lackschicht (22) über die Zwischenlage (3) hinaus erstreckt und/oder die Lackschicht (22) semitransparent oder transparent ist und/oder die Lackschicht (22) farblos ist und/oder keine Farbmittel aufweist und/oder die Lackschicht (22) aus einem UV-härtenden Lack gebildet ist und/oder die Lackschicht (22) eine Schichtdicke in einem Bereich von 1 µm bis 10 µm, vorzugsweise in einem Bereich von 1 µm bis 5 µm oder in einem Bereich von 3 µm bis 7 µm, aufweist und/oder mit einem Auftragsgewicht in einem Bereich von 2 g/m² bis 20 g/m², insbesondere von 2 g/m² bis 10 g/m², auf die Papierschicht (21) aufgebracht ist.

3. Versiegelungsetikett (1) nach einem der vorhergehenden Ansprüche, dass die Papierschicht (21) ein Transparentpapier umfasst oder daraus besteht.

4. Versiegelungsetikett (1) nach einem der vorhergehenden Ansprüche,
**dadurch gekennzeichnet,**
**dass** die Papierschicht (21) eine erste Außenfläche des Versiegelungsetiketts (1) ausbildet und/oder die Papierschicht (21) eine Schichtdicke in einem Bereich von 0,05 mm bis 0,1 mm aufweist.

5. Versiegelungsetikett (1) nach einem der vorhergehenden Ansprüche,
**dadurch gekennzeichnet,**
**dass** die Papierschicht (21) eine Dekorlage (5), welche insbesondere eine zweite Außenfläche des Versiegelungsetiketts (1) bildet, aufweist, insbesondere wobei die Dekorlage (5) eine Druckschicht umfasst oder daraus besteht und/oder die Dekorlage (5) eine Metallschicht umfasst oder daraus besteht und/oder die Dekorlage (5) ein optisch variables Element umfasst oder daraus besteht und/oder die Dekorlage (5) im Register aufgebracht ist.

6. Versiegelungsetikett (1) nach einem der vorhergehenden Ansprüche,
**dadurch gekennzeichnet, dass** die Zwischenlage (3) folgende Schichten aufweist:
eine nicht vollflächig auf die Trägerlage (2) aufgebrachte erste Funktionsschicht (31 ) zur Einstellung einer Haftkraft in der Zwischenlage (3),
eine auf die Trägerlage (2) und erste Funktionsschicht (31) aufgebrachte erste Farbschicht (33),
eine nicht vollflächig auf die erste Farbschicht (33) aufgebrachte zweite Funktionsschicht (32) zur Einstellung einer Haftkraft in der Zwischenlage (3),
eine vollflächig auf die zweite Funktionsschicht (32) und erste Farbschicht (33) aufgebrachte zweite Farbschicht (34),
und insbesondere, dass die erste Funktionsschicht (31) derart ausgestaltet ist,
dass die Haftkraft zwischen erster Funktionsschicht (31) und erster Farbschicht (33) geringer ist als die Haftkraft zwischen erster Farbschicht (33) und einer ihr direkt benachbarten Schicht, insbesondere der Trägerlage (2),
und die zweite Funktionsschicht (32) derart ausgestaltet ist, dass die Haftkraft zwischen zweiter Funktionsschicht (32) und erster Farbschicht (33) geringer ist als die Haftkraft zwischen zweiter Funktionsschicht (34) und einer ihr direkt benachbarten Schicht, insbesondere der zweiten Farbschicht (34) und/oder der Kleberschicht (4).

7. Versiegelungsetikett (1) nach Anspruch 6,
**dadurch gekennzeichnet,**
**dass** die erste Funktionsschicht (31) direkt auf die Lackschicht (22) aufgebracht ist und/oder die Kleberschicht (4) vollflächig auf die zweite Farbschicht (32) aufgebracht ist und/oder die erste und zweite Funktionsschicht (31, 32) zumindest bereichsweise nicht überlappend, insbesondere bei Betrachtung senkrecht auf eine von der Zwischenlage aufgespannte Ebene, angeordnet sind.

8. Versiegelungsetikett (1) nach Anspruch 6 oder 7,
**dadurch gekennzeichnet,**
**dass** zumindest eine der ersten Funktionsschicht (31) und zweiten Funktionsschicht (32) UV-lumineszierend ist und/oder die erste Funktionsschicht (31) eine Schichtdicke in einem Bereich von 1 µm bis 5 µm aufweist und/oder die erste Funktionsschicht (31) aus einer wasserbasierten Dispersionsfarbe gebildet ist und/oder die erste Farbschicht (33) eine Schichtdicke in einem Bereich von 1 µm bis 5 µm aufweist und/oder die erste Farbschicht (33) aus einer UV-härtbaren Druckfarbe gebildet ist und/oder die zweite Funktionsschicht (32) eine Schichtdicke in einem Bereich von 1 µm bis 5 µm aufweist und/oder die zweite Funktionsschicht (32) aus einer wasserbasierten Dispersionsfarbe gebildet ist und/oder die zweite Farbschicht (34) eine Schichtdicke in einem Bereich von 1 µm bis 5 µm aufweist und/oder die zweite Farbschicht (34) aus einer UV-härtbaren Druckfarbe gebildet ist.

9. Versiegelungsetikett (1) nach einem der vorhergehenden Ansprüche,
**dadurch gekennzeichnet,**
**dass** das Verhältnis der Haftkraft zwischen der zweiten Farbschicht (34) und der Kleberschicht (4) zur Haftkraft zwischen der ersten Farbschicht (33) und der ersten Funktionsschicht (31) größer 1 ist, insbesondere in einem Bereich von 1 bis 2 liegt, und/oder das Verhältnis der Haftkraft zwischen der Lackschicht (22) und der ersten Funktionsschicht (31) zur Haftkraft zwischen der ersten Funktionsschicht (31) und der ersten Farbschicht (33) größer 1 ist, insbesondere in einem Bereich von 1 bis 2 liegt, und/oder dass das Verhältnis der Haftkraft zwischen der ersten Farbschicht (33) und der zweiten Farbschicht (34) zur Haftkraft zwischen der ersten Farbschicht (33) und der ersten Funktionsschicht (31) größer 1 ist, insbesondere in einem Bereich von 1 bis 2 liegt, und/oder die Kleberschicht (4) derart ausgestaltet ist, dass die Haftkraft zwischen der Kleberschicht (4) und einer Substratoberfläche, auf welche die Kleberschicht (4) bevorzugt aufzukleben ist, höher ist als 5 N/cm, vorzugsweise in einem Bereich von 5 N/cm bis 20 N/cm liegt, und/oder das Verhältnis der Haftkraft zwischen der Lackschicht (22) und der ersten Farbschicht (33) zur Haftkraft zwischen der ersten Funktionsschicht (31) und der ersten Farbschicht (33) größer 1 ist, und/oder das Verhältnis der Haftkraft zwischen der ersten Farbschicht (33) und der zweiten Farbschicht (34) zur Haftkraft zwischen der ersten Farbschicht (33) und der zweiten Funktionsschicht (32) größer 1 ist, insbesondere in einem Bereich von 1 bis 2 liegt.

10. Versiegelungsetikett (1) nach einem der vorhergehenden Ansprüche,
**dadurch gekennzeichnet,**
**dass** die Zwischenlage (3) derart ausgestaltet ist, dass zusätzlich Sollbruchstellen (20) in der Trägerlage (2) vorliegen, insbesondere wobei die in der Trägerlage (2) vorliegenden Sollbruchstellen (20) an einen Öffnungsbereich mit der ersten und/oder zweiten Funktionsschicht (31,32) angrenzen und/oder die in der Trägerlage (2) vorliegenden Sollbruchstellen (20) sich zumindest teilweise in eine oder mehrere der folgenden Lagen und Schichten erstrecken: die Lackschicht (22), die Zwischenlage (3), insbesondere die erste Farbschicht (33) und/oder die zweite Farbschicht (34).

11. Versiegelungsetikett (1) nach einem der vorhergehenden Ansprüche,
**dadurch gekennzeichnet,**
**dass** die Kleberschicht (4) eine Schichtdicke in einem Bereich von 10 µm bis 50 µm aufweist und/oder mit einem Auftragsgewicht in einem Bereich von 10g/m² bis 50 g/m² auf die Zwischenlage (3) aufgetragen ist und/oder die Kleberschicht (4) ein oder mehrere Materialien ausgewählt aus Acrylat, Naturkautschuk, Synthesekautschuk umfasst oder daraus besteht.

12. Verfahren zur Herstellung eines Versiegelungsetiketts (1), insbesondere nach einem der vorhergehenden Ansprüche, mit den Schritten, insbesondere in der angegebenen Reihenfolge:
a) Bereitstellen einer Trägerlage (2), wobei die Trägerlage (2) zumindest eine Papierschicht (21) aufweist,
b) Aufbringen einer Zwischenlage (3) auf die Trägerlage (2), wobei die Zwischenlage (3) Sollbruchstellen (30) zur inneren Trennung der Zwischenlage (3) aufweist oder die Sollbruchstellen (30) in der Zwischenlage (3) erzeugt werden,
c) Aufbringen einer Kleberschicht (4) auf die Zwischenlage (3).

13. Verfahren nach Anspruch 12,
**dadurch gekennzeichnet,**
**dass** zwischen Schritt a) und Schritt b) folgender Schritt durchgeführt wird a1) Aufbringen einer Lackschicht (22), insbesondere als eine Ausgleichsschicht und/oder als eine Stabilisierungsschicht, auf die Papierschicht (21)
und **dass** in Schritt b) die Zwischenlage (3) auf die Lackschicht (22) aufgebracht wird, insbesondere wobei die Lackschicht in Schritt a1) mittels Flexodruck aufgebracht wird.

14. Verfahren nach Anspruch 12 oder 13,
**dadurch gekennzeichnet,**
**dass** das Verfahren folgenden Schritt aufweist:
Aufbringen, insbesondere Aufdrucken, einer Dekorlage (5) auf die Papierschicht (21), welche insbesondere eine zweite Außenfläche des Versiegelungsetiketts (1) bildet, insbesondere wobei die Dekorlage (5) im Register aufgebracht wird.

15. Verfahren nach einem der Ansprüche 12 bis 14,
**dadurch gekennzeichnet,**
**dass** Schritt b) folgende Schritte, insbesondere in der angegebenen Reihenfolge, umfasst:
b1) nicht vollflächiges Aufbringen einer ersten Funktionsschicht (31) zur Einstellung einer Haftkraft in der Zwischenlage (3),
b2) Aufbringen einer ersten Farbschicht (33) auf die Trägerlage (2) und erste Funktionsschicht (31),
b3) nicht vollflächiges Aufbringen einer zweiten Funktionsschicht (32) zur Einstellung einer Haftkraft in der Zwischenlage (3) auf die erste Farbschicht (33),
b4) vollflächiges Aufbringen einer zweiten Farbschicht (34) auf die zweite Funktionsschicht (32) und erste Farbschicht (33),
insbesondere wobei die erste Funktionsschicht (31) mit UV-lumineszierenden Pigmenten versehen ist oder wird und eine Registermarke erzeugt wird, die vor dem Aufbringen der zweiten Funktionsschicht (32) in Schritt b3) mit UV-Licht bestrahlt wird und anhand des abgestrahlten Lichts die Position der Registermarke bestimmt wird und dann bevorzugt zur Ausrichtung einer weiteren Schicht, insbesondere der zweiten Funktionsschicht (32) und/oder die Dekorlage (5), im Register verwendet wird.
